# EUROPEAN PATENT APPLICATION

(11) **EP 1 071 011 A2**
(43) Date of publication of application: **24.01.2001**
(21) Application number: 00108843.4
(22) Date of filing: 26.04.2000
(51) Int. Cl.: G06F 9/44

(54) **Object-oriented electronic control having history recording**

(30) Priority: 27.04.1999 JP 11986099
(71) Applicant: Denso Corporation, Kariya-city, Aichi-pref., 448-8661 (JP)
(72) Inventor: Kurono, Takeshi, Kariya-city, Aichi-pref. 448-8661 (JP)
(74) Representative: Leson, Thomas Johannes Alois, Dipl.-Ing.

(57) **Abstract**

An engine control is effected by an electronic control unit (1) which has an object-oriented control program. When any one of objects (OB0 - OBn) issues a message to request another object to carry out processing, the contents of the request message are stored in a log storage unit (6, 20) as an event in an execution history of control processing in the electronic control unit 1. Thus, in a process to debug a control program, it is possible to easily recognize which object among a plurality of objects has been executed as part of the control processing. In case a problem is encountered in an operation, an object having the problem can be identified with ease.

## Description

The present invention relates to an electronic control for controlling an object of control in accordance with an object-oriented program.

In recent electronic control apparatus, programming or development of a control program as an object-oriented program is proposed in EP 892,342 (JP-A-11-39172). In this object-oriented programming, processing of a program is thought in units each called an object. An object is a software module which is created as a collection of data and procedures (methods) for processing data. In the object-oriented programming, the total function of a control program is divided into details which are each associated with a unit function. For example, a function detail is associated with typically a component. An object is provided for each unit function.

In an exchange of messages between objects, a message sent from one object to another object in the course of processing is temporarily stored in a storage area. When the processing is completed, one of messages stored in the storage area is read out to activate a method of the object receiving the request for processing indicated by the message.

After a program has been written, it is generally necessary to debug the program. In a process to debug a program, control based on the program is actually executed in an electronic control apparatus, and the program is inspected to find out any problem in the program and to determine whether design specifications are met. If a problem is found, the program is corrected. This debugging process is also required for a program developed on the basis of the object orientation concept.

In the case of the object orientation concept, however, a program is developed by dividing the program into modules each designed for an object of control. Thus, when a control operation is carried out for a debugging purpose, it is impossible to know which object is actually activated and operates. In consequence, even if a result of the control execution actually indicates that the program clearly does not meet the specifications as intended by the design, it is difficult to identify an object causing the problem and to correct the problem.

It is thus an object of the present invention to make a control program easy to debug in an electronic control apparatus for controlling an object of control in accordance with a control program developed on the basis of the object orientation concept.

According to an electronic control of the present invention, a plurality of unit processing is carried out. Each processing is for implementing one of unit functions in accordance with objects acquired as a result of dividing a program for controlling objects of control into the unit functions. When a specific one of the unit processing outputs a message in the course its processing operation, it is stored in a message storage unit. When the unit processing operation is completed, the stored message is read out from the message storage unit. Another unit processing requested by the message is then carried out. A history recording unit stores the contents of the message as an event in an execution history of control processing.

Thus, during a process to debug a control program, it is possible to easily identify an object executing control processing among a plurality of objects constituting a control program. When a problem due to some causes is detected in an operation, the object involved in the problem can be identified with ease. In addition, it is also easy to detect a problem wherein an object supposed not to be executed according to the design is actually executed or a problem wherein an object supposed to be executed according to the design is actually not executed.

Other objects, features and advantages of the present invention will become more apparent from the following detailed description made with reference to the accompanying drawings. In the drawings:
Fig. 1 is a block diagram showing an electronic control unit according to a first embodiment of the present invention;
Fig. 2 is a conceptual diagram showing relations among objects for control of an engine, a message delivery control unit and a log storage unit;
Fig. 3 is a message sequence diagram showing a sequence of processing carried out by objects for controlling an idle rotational speed of the engine;
Fig. 4 is a table showing a connection information data base;
Figs. 5A to 5C are tables showing a memory block, a message storage area and a log storage area in a memory;
Figs. 6A to 6C are tables showing storage of memory blocks to an object message storage unit and a free memory block storage unit;
Fig. 7 is a state transition diagram showing state transitions of a message delivery control unit;
Fig. 8 is a flow diagram showing a message queuing process;
Fig. 9 is a flow diagram showing a message delivery processing;
Fig. 10 is a table showing a typical connection information data base used for storing objects for controlling the idle rotational speed of the engine;
Fig. 11 is a flow diagram showing processing for making a request to start a logging process and a request to end the logging process;
Fig. 12 is a flow diagram showing an idle throttle setting start request method;
Fig. 13 is a flow diagram showing a coolant temperature acquisition response method;
Fig. 14 is a flow diagram showing an engine rotational speed acquisition response method;
Fig. 15 is a flow diagram showing a coolant temperature acquisition request method;
Fig. 16 is a flow diagram showing a coolant temperature digital value acquisition response method;
Fig. 17 is a flow diagram showing a coolant temperature digital value acquisition request method;
Fig. 18 is a flow diagram showing a throttle setting start request method;
Fig. 19 is a flow diagram showing an engine rotational speed acquisition request method;
Fig. 20 is a table showing an execution history of control operations carried out in the first embodiment;
Figs. 21A and 21B are tables showing a message storage area and a log storage area in a memory implemented in a second embodiment of the present invention;
Fig. 22 is a flow diagram showing a message queuing process;
Fig. 23 is a flow diagram showing message delivery processing;
Fig. 24 is a table showing an execution history of control operations in the second embodiment;
Fig. 25 is a table showing a log storage area in a memory in a third embodiment;
Fig. 26 is a flow diagram showing a coolant temperature acquisition request method in a fourth embodiment;
Fig. 27 is a flow diagram showing a coolant temperature digital value acquisition response method;
Fig. 28 is a schematic diagram showing a typical configuration of a software junction inspection apparatus for carrying out inspection of a control program based on an execution history of control operations carried out in the embodiments;
Fig. 29 is a flow diagram showing inspection processing carried out by the software junction inspection apparatus; and
Fig. 30 is a flow diagram showing comparison processing carried out by the software junction inspection apparatus.

The present invention will be described in further detail with reference to various embodiments which are applied to an electronic control apparatus of an engine.

### (First Embodiment)

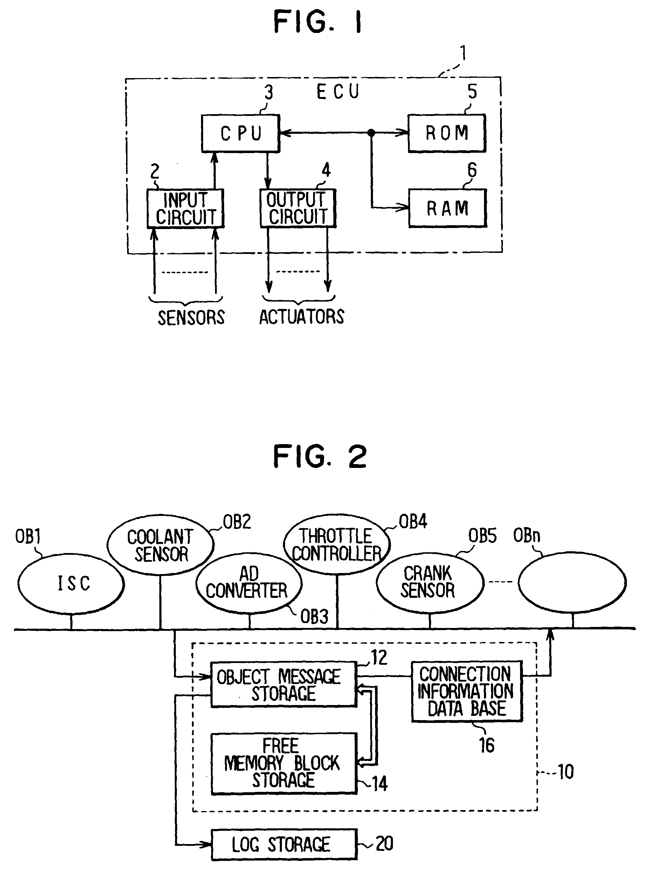

As shown in Fig. 1, an electronic control unit (ECU) 1 comprises an input circuit 2 for inputting signals generated by a variety of sensors, a CPU 3 for computing an optimum control quantity for the engine from the signals input by the input circuit 2, and an output circuit 4 for driving actuators of the engine in response to control signals received from the CPU 3. The sensors include a coolant temperature sensor for detecting the coolant temperature THW in an engine (not shown), a crank sensor for detecting the rotational speed NE of the engine, and the like. The actuators include a throttle valve, injectors (fuel injection valves), and the like. The ECU 1 further comprises a ROM 5 as a nonvolatile memory for storing a program to be executed by the CPU 3 in controlling the engine and storing data to be referenced during the execution of the program, and a RAM 6 as a volatile memory for temporarily storing information such as a result of processing output by the CPU 3.

In the ECU 1, the CPU 3, the ROM 5 and the RAM 6 are main components of a microcomputer which also includes an I/O port between the CPU 3 and the input circuit 2, and an I/O port between the CPU 3 and the output circuit 4. Though not shown in the figure, the I/O port between the CPU 3 and the input circuit 2 is used by the CPU 3 for inputting signals from the input circuit 2, whereas the I/O port between the CPU 3 and the output circuit 4 is used by the CPU 3 for outputting signals to the output circuit 4. In addition, a part of storage area of the RAM 6 is set as a backup RAM capable of retaining data stored therein even in a state in which power supplied to the ECU 1 is cut off.

Moreover, the ECU 1 has a configuration in which it is possible to be connected to an external debugging tool (not shown) for fetching a program execution history from the RAM 6. Furthermore, the RAM 6 also includes a logging request flag FG for determining whether the execution history of the program in the ECU 1 is to be recorded. If the logging request flag FG is set, the execution history (log) of control processing in the ECU 1 is recorded as will be described later.

Here, an engine control program stored in the ROM 5 for execution by the CPU 3 and its data also stored in the ROM 5 in the ECU 1 are programmed based on an object-oriented programming. The ECU 1 is provided with a message delivery control unit 10 serving as means for implementing the inter-object message exchange as shown in Fig. 2. In addition, the ECU 1 is provided also with a log storage unit 20 used as means for implementing the recording of an execution history. It should be noted that the message delivery control unit 10 functions as a part of unit processing control means, whereas the log storage unit 20 functions as a part of history recording means.

It is to be noted that Fig. 2 is not a diagram showing a hardware configuration of the ECU 1. Instead, it is a functional or conceptual diagram showing relations among engine control objects stored in the ROM 5, the message delivery control unit 10 and the log storage unit 20. The message delivery control unit 10 is not a unit comprising hardware components. Instead, the message delivery control unit 10 is a functional means implemented by operations of the CPU 3 according to an object for control of message deliveries stored in the ROM 5. Similarly, the log storage unit 20 is not a unit comprising hardware components. Instead, the log storage unit 20 is a functional means implemented by operations of the CPU 3 according to an object for log recording stored in the ROM 5.

In the following description, the message delivery control unit 10 is exemplified by a program portion for controlling an idle rotational speed of the engine.

As shown in Fig. 2, objects used for controlling the idle rotational speed of the engine and stored in the ROM 5 are: an ISC object OB1 for computing a target throttle angle TA for setting the rotational speed of the engine at an optimum idle rotational speed on the basis of data such as the coolant temperature THW and the actual rotational speed NE of the engine; a coolant temperature sensor object OB2 for converting a digital value acquired as a result of A/D conversion of an analog signal generated by a coolant temperature sensor into a coolant temperature; an A/D converter object OB3 for controlling an A/D converter (not shown) for carrying out A/D conversion to convert an analog signal generated by the coolant temperature sensor into a digital value; a crank sensor object OB5 for computing a rotational speed of the engine from a signal generated by a crank sensor; and a throttle controller object OB4 for controlling a throttle valve of the engine so as to adjust the actual throttle angle of the throttle valve to a target throttle angle computed by the ISC object.

In addition, objects other than the objects OB1 to OB5 are also stored in the ROM 5. The other objects include an object for implementing the function of the message delivery control unit 10 and an object for implementing the function of the log storage unit 20. The object for implementing the function of the message delivery control unit 10 is also referred to as a message delivery control object.

The following description explains an outline of pieces of processing carried out by the objects OB1 to OB5 by referring to a message sequence diagram.

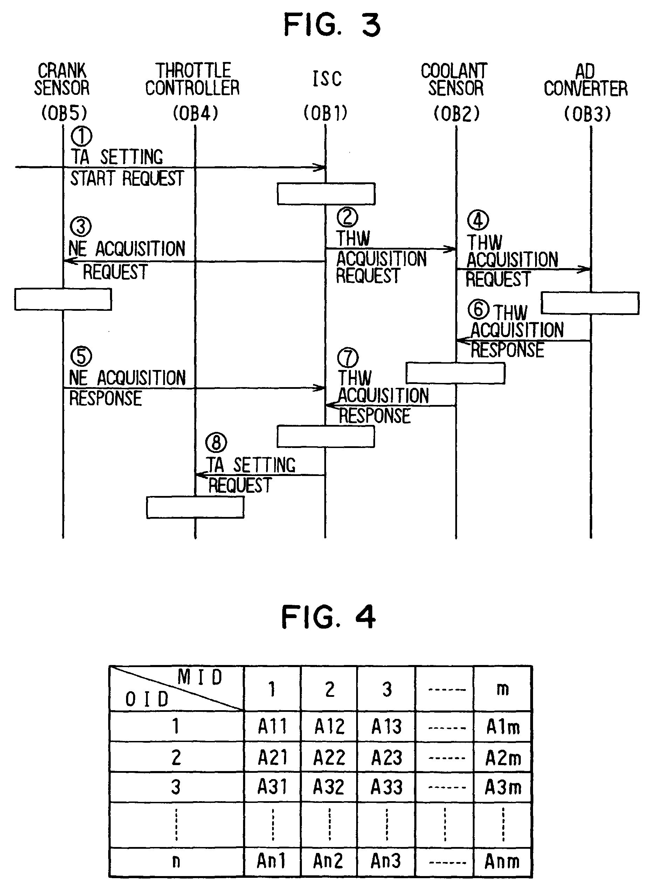

As shown in Fig. 3, the message sequence diagram begins with a message transmission (1) at which an object other than the objects OB1 to OB5 transmits a message making a request to start throttle setting to the ISC object OB1. Receiving the message, the ISC object OB1 starts its operation. That is, the CPU 3 starts execution of a method of the ISC object OB1.

Then, at a message transmission (2) of the message sequence diagram, the ISC object OB1 transmits a message making a request to acquire a coolant temperature THW to the coolant temperature sensor object OB2. Subsequently, at a message transmission (3) of the message sequence diagram, the ISC object OB1 transmits a message making a request to acquire a rotational speed NE of the engine to the crank sensor object OB5.

Receiving the message making a request to acquire a coolant temperature, the coolant temperature sensor object OB2 operates, transmitting a message making a request to acquire a digital value of the coolant temperature to the A/D converter object OB3 in a message transmission (4).

On the other hand, receiving the message making a request to acquire a rotational speed NE of the engine, the crank sensor object OB5 operates, computing a rotational speed of the engine from a signal generated by the crank sensor. Then, at a message transmission (5) of the message sequence diagram after completion of the computation of the engine rotational speed, the crank sensor object OB5 transmits a message returning the computed rotational speed of the engine to the ISC object OB1. This message also indicates that the computation of the rotational speed of the engine has been completed.

On the other hand, receiving the message making a request to acquire a digital value of the coolant temperature from the coolant temperature sensor object OB2, the A/D converter object OB3 operates, carrying out processing to convert an analog signal generated by the coolant temperature sensor into a digital value. Then, at a message transmission (6) of the message sequence diagram after completion of the conversion processing, the A/D converter object OB3 transmits a message returning the digital value of the coolant temperature to the coolant temperature sensor object OB2. This message also indicates that the processing to convert an analog signal generated by the coolant temperature sensor into the digital value of the coolant temperature has been completed.

Receiving the message returning the digital value of the coolant temperature, the coolant temperature sensor object OB2 computes a coolant temperature from the result of the conversion processing sent by the A/D conversion object OB3. Then, at a message transmission (7) of the message sequence diagram after the computation of the coolant temperature, the coolant temperature sensor object OB2 transmits a message returning the computed coolant temperature to the ISC object OB1. This message also indicates that the computation of the coolant temperature has been completed.

Then, in accordance with the message returning the computed coolant temperature and message returning the computed rotational speed of the engine, the ISC object OB1 operates, computing a target throttle angle TA from the coolant temperature computed by the coolant temperature sensor object OB2 and the rotational speed of the engine computed by the crank sensor object OB5. Subsequently, at a message transmission (8) of the message sequence diagram after the computation of the target throttle angle, the ISC object OB1 transmits a message making a request to set the throttle to the throttle controller object OB4. This message also indicates that the target throttle angle has been computed.

Receiving the request, the throttle controller object OB4 operates, controlling the throttle of the engine to adjust the throttle angle to the computed target throttle angle. As a result, the engine is controlled so that the rotational speed of the engine is set at an optimum idle rotational speed.

As described above, the objects OB1 to OB5 exchange messages making a request for processing and returning a result of the processing with each other in inter-object message exchanges in which objects, namely, the objects OB1 to OB5, each requested to carry out processing through a message operate in a determined order of processing. It should be noted that an object requested to carry out processing through a message is also referred to as a message transmission destination or a message transmission destination.

In order to implement the inter-object message exchange, the message delivery control unit 10 puts messages output by objects on a queue. Each time a predetermined delivery condition is satisfied, a message put first in the queue is taken out and delivered to an object serving as the message transmission (output) destination.

It should be noted that the technical term 'queue' means a waiting line and the phrase 'to catalog a message on a queue' means an operation to insert the message into a storage area of the queue. A queue is a kind of data structure in which data is inserted or cataloged into one end of the structure (referred to as a tail end) while data at the other end is removed. The technical term 'delivery' implies an operation to start processing of an object serving as an transmission destination of a message or, specifically, an operation to start execution of a method of an object specified in the message.

As shown in Fig. 2, the message delivery control unit 10 comprises an object message storage unit 12 for cataloging a message output by an object in a queue, and a free memory block storage unit 14 for storing a free memory block to be used for actually storing a message which is cataloged in the queue.

The object message storage unit 12 and the free memory block unit 14 secure a message storage area, that is, a storage area used exclusively for storing messages, in the RAM 6. The size of a message storage area reserved by them changes dynamically. It should be noted that the object message storage unit 12, the free memory block unit 14 and a message storage area secured by them function as a part of a message storage means.

Here, the contents of a message issued by an object include an object identification number indicating an object serving as the delivery destination of the message and a method identification number identifying one of methods of the delivery destination object to be executed. The object identification number and the method identification number are hereafter abbreviated to an OID and an MID, respectively. Furthermore, the message may also include arguments. It should be noted that, in place of arguments, the message may include an address of a location for storing data required for processing of an object serving as the message transmission destination.

As shown in Fig. 2, the message delivery control unit 10 is further provided with a connection information data base 16 for storing information used for identifying a delivery destination of a message read out from the object message storage unit 12, that is, for identifying an address of an area in the ROM 5 for storing a method identified by the MID of an object identified by the OID included in the message read out from the object message storage unit 12.

As shown in Fig. 4, the connection information data base 16 is used for storing a table of data associating each pair of an OID and an MID with a start address of an area in the ROM 5 for storing a method identified by the MID of an object identified by the OID. Such an address is referred to as an execution start address. For example, in the data table shown in Fig. 4, a method identified by an MID m of an object identified by an OID n is stored in area in the ROM 5 starting at an address Anm. The connection information data base 16 for storing such a data table is stored in the ROM 5 along with objects. It should be noted that the connection information data base 16 functions as storage location storage means.

Next, the object message storage unit 12 and the free memory block unit 14 are explained in detail. A message storage area is specified and secured for the object message storage unit 12 and the free memory block unit 14. A message storage area is stored to messages in units having a predetermined size, and the number of storage units of the storage area stored to messages is determined in accordance with the amount of data included in the messages. An storage unit of the message storage area is referred to as a memory block. That is, an area specially for storing messages is reserved in the RAM 6. The area comprises a predetermined number of memory blocks specified in the program. For example, the number of memory blocks is 5.

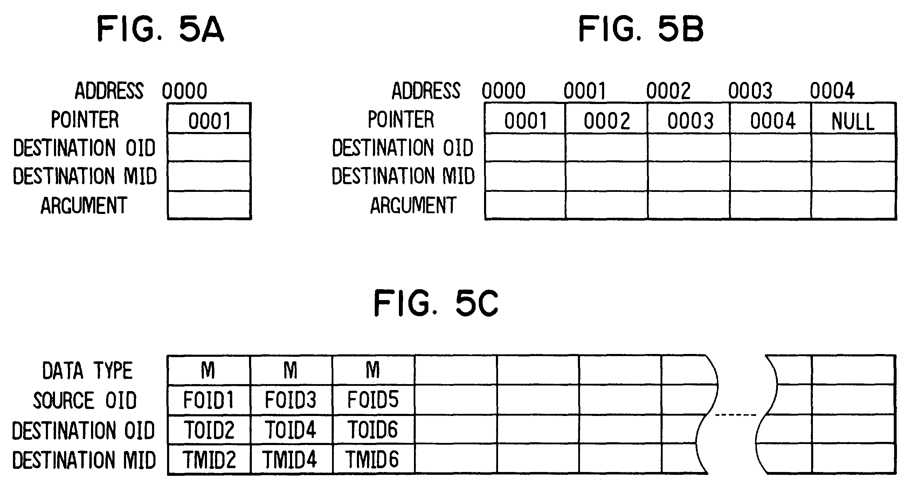

As shown in Fig. 5A, a memory block comprises a transmission destination OID portion, a transmission destination MID portion and an argument portion. The transmission destination OID portion is used for storing an OID identifying an object serving as the transmission destination of a message, that is, an object at the transmission destination requested to carry out processing. On the other hand, the transmission destination MID portion is used for storing an MID identifying a method of an object serving as the transmission destination of the message. The argument portion is used for storing arguments. A memory block also includes a pointer. A pointer is the memory address of a memory block to be stored next by the free memory block unit 14 to the object message storage unit 12 or to be released next by the object message storage unit 12 to the free memory block unit 14. Thus, pointers of memory blocks set a predetermined rule prescribing an order of storage and release of memory blocks.

It is assumed for example that 5 memory blocks have been secured in a message storage area at consecutive memory addresses 0000 to 0004 respectively. In this case, as shown in Fig. 5B, the pointer of the memory block secured at the memory address 0000 is set at the same value as the following memory address 0001. Similarly, the pointer of the memory block secured at the memory address 0001 is set at the same value as the following memory address 0002 an so on. Since a sixth memory block has not been secured yet, the pointer of the fifth memory block secured at the memory address 0004 is NULL to indicate that no next memory block has been secured after the fifth memory block.

In order to simplify the following description, it has been assumed that the number of secured memory blocks is 5, and that the 5 memory blocks are to be stored and released in the following order of memory addresses: 0000 → 0001 → 0002 → 0003 → 0004. The assumption holds true uniformly throughout the following description. It should be noted, however, that the number of secured memory blocks and the memory addresses in the order of storage/release are typical to the bitter end.

A secured memory block already used for recording a message, that is, a secured memory block including an OID and an MID, is referred to as a message block which is controlled by the object message storage unit 12. On the other hand, a secured memory block not used yet for recording a message is referred to as a free memory block which is controlled by the free memory block unit 14.

A message issued by an object is stored in a free memory block which then becomes a message block. Thus, the number of free memory blocks controlled by the free memory block unit 14 is reduced by 1 while the number of message blocks controlled by the object message storage unit 12 is incremented by 1. The new message block for storing the message is stored to the object message storage unit 12, that is, the message is cataloged on a queue. When a message is read out from the object message storage unit 12 to be delivered to another object, on the other hand, a message block in which the message was stored is returned (or released) from the object message storage unit 12 to the free memory block unit 14.

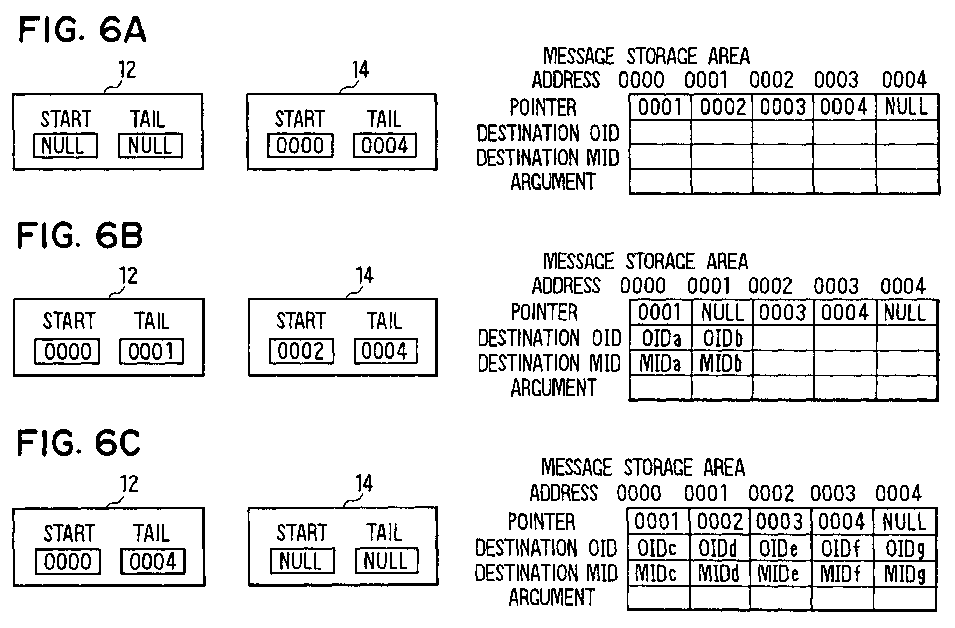

The following description explains how secured memory blocks are stored from the message storage area to the free memory block unit 14, stored from the free memory block unit 14 to the object message storage unit 12 and then returned (or released) from the object message storage unit 12 back to the free memory block unit 14 by referring to Fig. 6.

Among message blocks controlled by the object message storage unit 12, the address of a message block to be released first is stored as a start address and the address of a message block to be released last is stored as a last address. Similarly, among free memory blocks controlled by the free memory block unit 14, the address of a free memory block to be stored first is stored as a start address and the address of a free memory block to be stored last is stored as a tail address.

Initially, no messages are cataloged in the queue so that all memory blocks are stored to the free memory block unit 14 as free memory blocks. In this state, in the free memory block unit 14, the start address is set at 0000 while the tail address is set at 0004 as shown in Fig. 6A. In the object message storage unit 14, on the other hand, the start and tail addresses are both set to NULL.

It is assumed that the memory blocks have been secured in advance in the message storage area at addresses 0000 and 0004. In this initial state, the memory blocks are all stored in the free memory block unit 14 as free memory blocks as described above. The pointers in the memory blocks are set at 0001, 0002, 0003, 0004 and NULL respectively in accordance with a predetermined order of storage/release.

In this state, objects start exchanging messages. It is assumed that two messages are cataloged in the queue during the exchanges of messages. As a result, the start and tail addresses in the object message storage unit 12 are set at 0000 and 0001 respectively whereas the start and tail addresses in the free memory block unit 14 are set at 0002 and 0004 respectively as shown in Fig. 6B.

In addition, the free memory blocks at memory addresses 0000 and 0001 become message blocks and their pointers are set at 0001 and NULL respectively. On the other hand, the memory blocks at memory addresses 0002, 0003 and 0004 remain as free message blocks and their pointers are set at 0003, 0004 and NULL respectively. It should be noted that OIDa and OIDb are OIDs of transmission destinations of the messages cataloged in the queue whereas MIDa and MIDb are MIDs of methods of the transmission destinations.

It is assumed here that, starting with the state shown in Fig. 6A, objects exchange messages. This time, it is assumed that 5 messages are cataloged in the queue during the exchanges of messages. As a result, the start and tail addresses in the object message storage unit 12 are set at 0000 and 0004 respectively whereas the start and tail addresses in the free memory block unit 14 are both set at NULL as shown in Fig. 6C.

In addition, the free memory blocks at memory addresses 0000 to 0004 become message blocks and their pointers are set at 0001 to NULL respectively as shown in the figure. It should be noted that OIDc to OIDg are OIDs of transmission destinations of the messages cataloged in the queue whereas MIDc to MIDg are MIDs of methods of the transmission destinations.

When a message issued by an object is cataloged in the queue, first of all, the free memory block unit 14 stores a free memory block indicated by the start address in the free memory block unit 14 to the message, converting the free memory block into a new message block, and then updates the start address to the memory address of a free memory block immediately following the new message block.

Then, the OID, the MID and the argument of the message are recorded into their respective portions in the new message block. The new message block is then cataloged at the tail of the queue in the object message storage unit 12 by executing the steps of: updating the pointer in a message block indicated by the tail address in the object message storage unit 12 from NULL to the memory address of the new message block; updating the pointer in the new message block to NULL; and updating the tail address in the object message storage unit 12 to the memory address of the new message block.

When a message cataloged in the queue is delivered to a destination object, on the other hand, a head message block at a memory address recorded as the start address in the object message storage unit 12 is selected from the queue. The start address in the object message storage unit 12 is then updated to the memory address of a message block immediately following the head message block which is returned to the free memory block unit 14. The destination object is identified by an OID and an MID included in the message read out from the head message block.

The memory block returned by the free memory block unit 14 is secured at the tail of a list of free memory blocks in the free memory block unit 14 as a new free memory block by executing the steps of: updating the pointer in a free memory block indicated by the tail address in the free memory block unit 14 from NULL to the memory address of the newly returned free memory block; updating the pointer in the newly returned free memory block to NULL; and updating the tail address in the free memory block unit 14 to the memory address of the newly returned free memory block.

All memory blocks secured in the message storage area in the RAM 6 are initially stored in the free memory block unit 14. When an object issues a message, a free memory block is handed over (transferred) from the free memory block unit 14 to the object message storage unit 12 and the message is stored in the transferred memory block. When a message is delivered to a destination object, the message is read out from a message block in the queue in the object message storage unit 12. The message block becomes a free memory block which is returned from the object message storage unit 12 to the free memory block unit 14 for later reuse.

On the other hand, the log storage unit 20 secures a storage area with a predetermined size in the RAM 6 to serve as a log storage area used for storing an execution history like one shown in Fig. 5C. When a message is cataloged in the queue in the object message storage unit 12 with a logging request flag FG set, information on the message is stored in 1 block of the log storage area. It should be noted that the operation to record an execution history in the log storage area is referred to as an operation to store (or record or write) an event in the history in the log storage unit 20. It is also worth noting that the log storage area functions as a part of a history storage area.

As shown in Fig. 5C, the information on a message comprises the OID of the transmission source, the OID of the transmission destination and the MID of a method of the transmission destination. The OID of the transmission source is an OID identifying an object serving as the source of transmission transmitting the message. The OID of the transmission destination is an OID identifying an object serving as the destination of transmission receiving the message. The MID of a method of the transmission destination is an MID identifying a method to be executed among methods pertaining to the object serving as the transmission destination. That is, the information on a message includes the OID of the transmission source and the contents of the message, namely, the OID of the transmission destination and the MID of a method of the transmission destination.

A data type in the log storage area shown in Fig. 5C is an area for storing the type of data recorded as an event in an execution history. In particular, an M data type indicates that the data is information on a message which is stored in the block in the log storage area as an event in an execution history.

It should be noted that, in the example shown in Fig. 5C, the first block is used for recording information on a message with an OID of TOID2 and an MID of TMID2 sent by an object with an OID of FOID1. The following second block is used for recording information on a message with an OID of TOID4 and an MID of TMID4 sent by an object with an OID of FOID3. The following third block is used for recording information on a message with an OID of TOID6 and an MID of TMID6 sent by an object with an OID of FOID5.

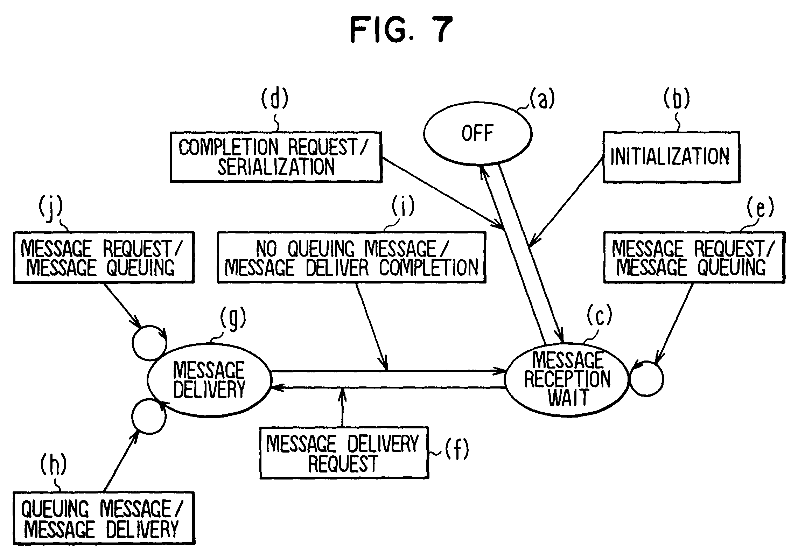

Next, state transitions and functions of the message delivery control unit 10 are explained by referring to Fig. 7. It should be noted that Fig. 7 is a diagram showing state transitions of the message delivery control unit 10. In addition, the processing of the message delivery control unit 10 to be described below is actually operations carried out by the CPU 3 in accordance with data and methods of objects for control of deliveries of messages stored in the ROM 5.

The message delivery control unit 10 is put in an off state shown by (a) in Fig. 7 when the ignition switch of the car is turned off to halt the operation of the microcomputer serving as the ECU 1. Then, when a request for initialization is made by typically turning on the ignition switch from the off state or resetting the microcomputer, for example, initialization is carried out as shown by (b) in Fig. 7 prior to a transition to a message reception wait state shown by (c) in Fig. 7.

In the initialization shown by (b) in Fig. 7, the object message storage unit 12 is initialized. Specifically, free memory blocks held by the object message storage unit 12 are handed over to the free memory block unit 14. Then, the free memory block unit 14 is initialized. Thus, the initialization puts the message delivery control unit 10 in a state that allows a free memory block held by the free memory block unit 14 to be transferred to the object message storage unit 12 whenever an object issues a message.

After completing such initialization, the message delivery control unit 10 enters the message reception wait state.

The message reception wait state is a state in which it is possible to catalog a message output by an object in the queue in the object message storage unit 12. When a request for completion is made by, for example, turning off the ignition switch, the message delivery control unit 10 carries out serialize processing shown by (d) in Fig. 7 before returning to the off state.

In the serialize processing shown by (d) in Fig. 7, first of all, data stored in the object message storage unit 12 is saved to a backup RAM. Then, data stored in the free memory block unit 14 is also saved to the backup RAM. After completing the serialize processing, the message delivery control unit 10 returns to the off state.

When a message is issued by an object while the message delivery control unit 10 is in the message reception wait state, on the other hand, a message queuing process shown by (e) in Fig. 7 is carried out to catalog the message in the queue in the object message storage unit 12 before going back to the message reception wait state.

It should be noted that, in this embodiment, an object issues a message by making a request for transmission of the message. In the following description, a notation 'message (n, m)' denotes a message with an OID having a value n where n = 1, 2 and so on and an MID having a value m where m = 1, 2 and soon. A message transmission request for outputting a message (n, m) is denoted by a notation 'message transmission request (n, m)'.

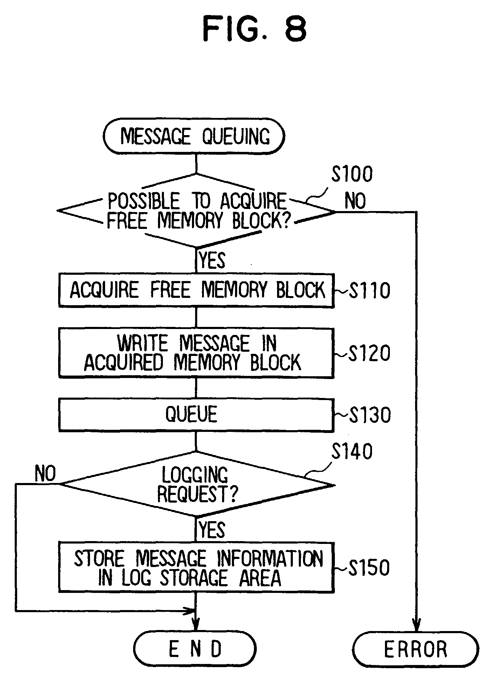

A message queuing process which is carried out when an object issues a message, that is, when the object makes a request for transmission of the message, is explained by referring to a flow diagram shown in Fig. 8. As shown in Fig. 8, the flow diagram begins with a step 100 to determine whether it is possible to acquire a free memory block from the free memory block unit 14, that is, whether the free memory block unit 14 has a free memory block. In the following description, a step of a flow diagram is abbreviated as 'S'. If it is possible to acquire a free memory block from the free memory block unit 14, that is, if the result of the determination at S100 is YES, the process proceeds to S110 at which a head free memory block is acquired from the free memory block unit 14. A head free memory block is a free memory block at the head of a queue for cataloging tree memory blocks in the free memory block unit 14.

Next, at S120, the message output by the object this time is written into the free memory block acquired from the free memory block unit 14. Specifically, the contents of the message including an OID, an MID and an argument are written into the free memory block.

Then, at S130, the free memory block with the message written thereto at S120 is cataloged in the queue in the object message storage unit 12. That is, the free memory block with the message written thereto is put at the tail of the queue of message blocks in the object message storage unit 12 as a new last message block. Specifically, the pointer of an old last message block cataloged at the tail of the queue so far is updated to the memory address of the free memory block with the message written thereto at S120, and the pointer of the free memory block with the message written thereto at S120 is set to NULL. Then, the memory address of the free memory block with the message written thereto is stored in the object message storage unit 12 as the tail address.

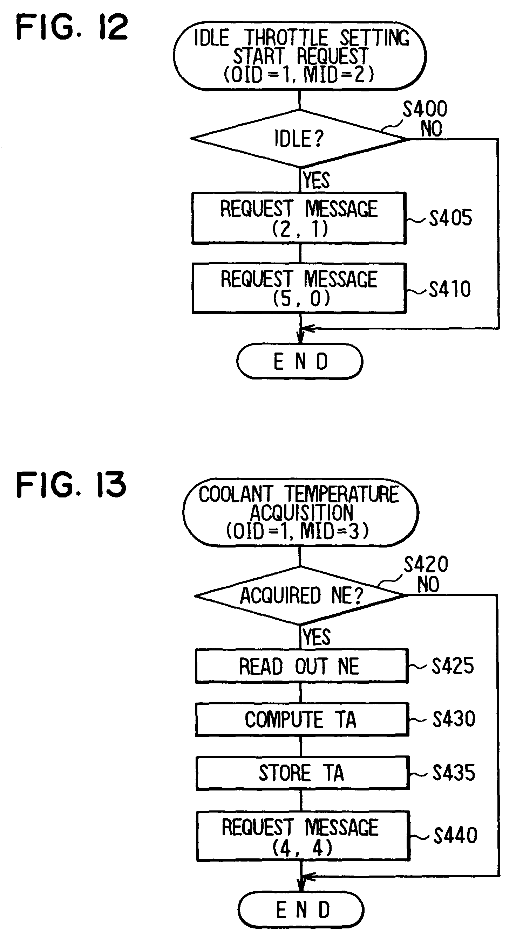

After the processing of S130 is completed, the process proceeds to S140 to determine whether a logging request exists, that is, whether an execution history is to be recorded. The existence of a logging request is determined by checking whether a logging request flag FG has been set by a logging start request made typically at S300 of a flow diagram shown in Fig. 11 to be described later. A set logging request flag FG or a YES result of the determination at S140 indicates that a logging request exists or that an execution history is to be recorded.

In this case, the process proceeds to S150 at which the OID of an object serving as the transmission source of the newly cataloged message object as well as the OID and the MID of the object serving as the transmission destination are stored in the log storage unit 20 before completing this message queuing process. On the other hand, a reset logging request flag FG or a NO result of the determination at S140 indicates that no logging request exists or that an execution history is not to be recorded. In this case, this message queuing process is completed without continuing to S150.

If it is impossible to acquire a free memory block from the free memory block unit 14, that is, if there is no free memory block in the free memory block unit 14 or if the result of the determination at S100 is NO, on the other hand, an error message is issued to a method of the object making a request for transmission of a message. In this way, predetermined failsafe processing is carried out.

It should be noted that the message queuing process functions as unit processing control means used for receiving a message issued by any one of a plurality of unit processing means and storing the message into message storage means. The processing of S150 functions as a part of history recording means.

Referring back to Fig. 7, when a request for a delivery of a message is made as shown by (f) in Fig. 7 while the message delivery control unit 10 is in the message reception wait state, the message delivery control unit 10 transits to a message delivery state shown by (g) in Fig. 7.

In the message delivery state, if a message exists in the queue in the object message storage unit 12, message delivery processing to be described later is carried out to deliver the message in the queue as shown by (h) in Fig. 7. That is, a method of an object specified by the message is executed. If no message exists in the queue in the object message storage unit 12, on the other hand, the message delivery control unit 10 returns to the message reception wait state as shown by (i) in Fig. 7.

If a request for transmission of a message is made by an object in execution while the message delivery control unit 10 is in the message delivery state, the message queuing process represented by the flow diagram shown in Fig. 8 is carried out as shown by (j) in Fig. 7 in the same way as the message queuing process shown by (e) in Fig. 7 for the message reception wait state.

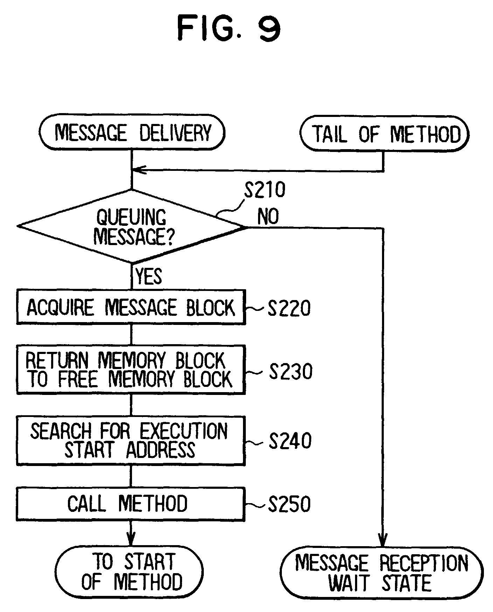

The message delivery processing represented by a flow diagram shown in Fig. 9 is carried out when an object makes a request for a delivery of a message or when execution of a method of an object is completed as evidenced by a notice of the completion of the method execution transmitted by the object to the message delivery control unit 10.

As shown in Fig. 9, the flow diagram representing the execution of the message delivery processing begins with S210 to determine whether a message exists in the queue in the object message storage unit 12, that is, whether a message block can be acquired from the object message storage unit 12. If a message exists in the queue, that is, if the result of the determination at S210 is YES, the processing proceeds to S220 at which a head message block is acquired from the object message storage unit 12. A head message block is a message block at the head of the queue for cataloging message blocks in the object message storage unit 12. Then, the contents of a message including a the OID of the transmission destination and the MID of the transmission destination stored in the message block are read out.

Next, at S230, the message block acquired at S220 is cataloged at the tail of the queue of free memory blocks in the free memory block unit 14 as a free memory block.

Then, at S240, the connection information data base 16 is searched for a start address (or an execution start address) in the ROM 5 for storing a method of an object which corresponds to the OID and the MID read out at S220 as the contents of the message. Subsequently, at S250, the method starting at the execution start address found at S240 is called.

Thereby, control of execution of a program by the CPU 3 is transferred to the start of the method of the object corresponding to the contents of the message read out at S220. That is, the message is delivered to the object. As the execution of the method is completed, the message delivery processing is again carried out, starting with S210.

If no message is found in the queue in the object message storage unit 12 at S210, that is, if the result of the determination at S210 is NO, on the other hand, the message delivery control unit 10 returns to the message reception wait state as shown by (i) in Fig. 7.

It should be noted that the message delivery processing functions as the unit processing control means for reading out a message from the message storage means upon completion of a processing operation carried out by the unit processing means and driving a unit processing means requested to carry out processing by the message.

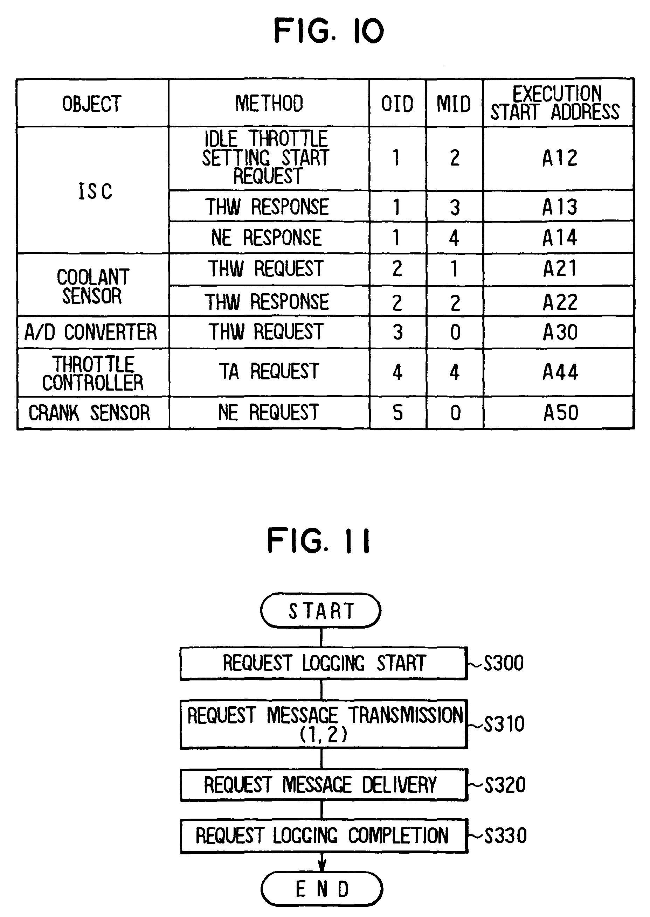

The following description explains how the message delivery control unit 10 implements the inter-object message exchanges among the objects for controlling the idle rotational speed, that is, the objects OB1 to OB5. That is, the following description explains how the operations represented by the message sequence diagram are carried out in concrete terms by referring to Figs. 10 to 19.

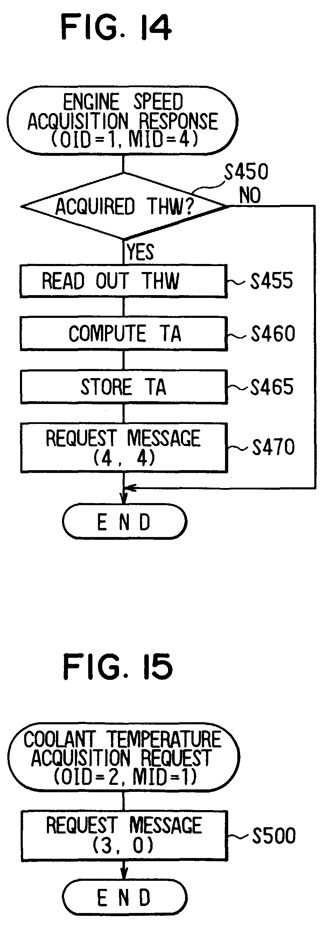

Fig. 10 is an explanatory diagram showing a typical table in the connection information data base 16 listing objects for controlling the idle rotational speed of the engine. As shown in Fig. 10, for example, the ISC object OB1 has an idle throttle setting start request method represented by a flow diagram shown in Fig. 12, a coolant temperature acquisition response method represented by a flow diagram shown in Fig. 13 and an engine rotational speed acquisition response method represented by a flow diagram shown in Fig. 14. The idle throttle setting start request method is executed in response to a message (1, 2) sent in the message transmission (1) shown in Fig. 3 as a message serving as a request to start throttle setting.

As described above, a message (1, 2) is a message with an OID of 1 and an MID of 2. The coolant temperature acquisition response method is executed in response to a message (1, 3) sent in the message transmission (7) shown in Fig. 3 as a message serving as a response to a request to acquire a coolant temperature. The engine rotational speed acquisition response method is executed in response to a message (1, 4) sent in the message transmission (5) shown in Fig. 3 as a message serving as a response to a request to acquire a rotational speed of the engine.

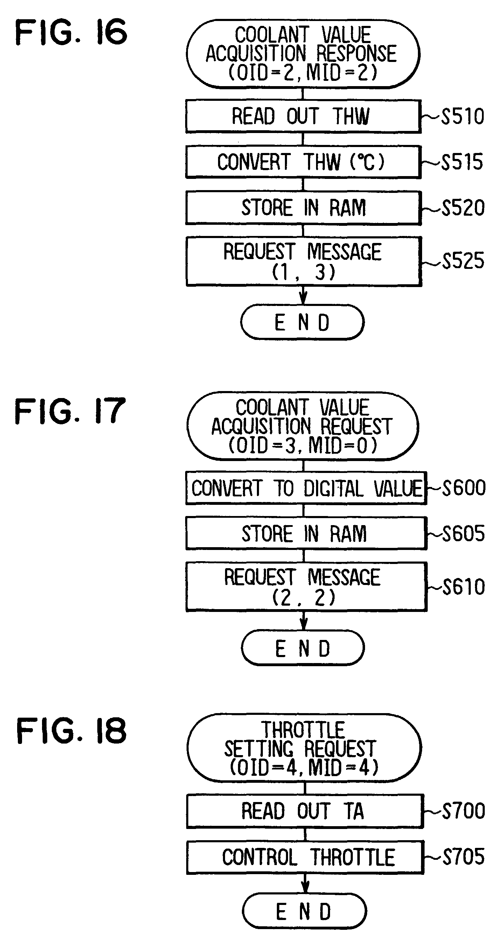

The coolant sensor object OB2 has a coolant temperature acquisition request method represented by a flow diagram shown in Fig. 15 and a coolant temperature digital value acquisition response method shown in Fig. 16. The coolant temperature acquisition request method is executed in response to a message (2, 1) sent in the message transmission (2) shown in Fig. 3 as a message serving as a request to acquire a coolant temperature. The coolant temperature digital value acquisition response method is executed in response to a message (2, 2) sent in the message transmission (6) shown in Fig. 3 as a message serving as a response to a request to acquire a digital value of the coolant temperature.

The AD converter object OB3 has a coolant temperature digital value acquisition request method shown in Fig. 17. The coolant temperature digital value acquisition request method is executed in response to a message (3, 0) sent in the message transmission (4) shown in Fig. 3 as a message serving as a request to acquire a digital value of the coolant temperature.

The throttle controller object OB4 has a throttle setting request method shown in Fig. 18. The throttle setting request method is executed in response to a message (4, 4) sent in the message transmission (8) shown in Fig. 3 as a message serving as a request to set a throttle angle.

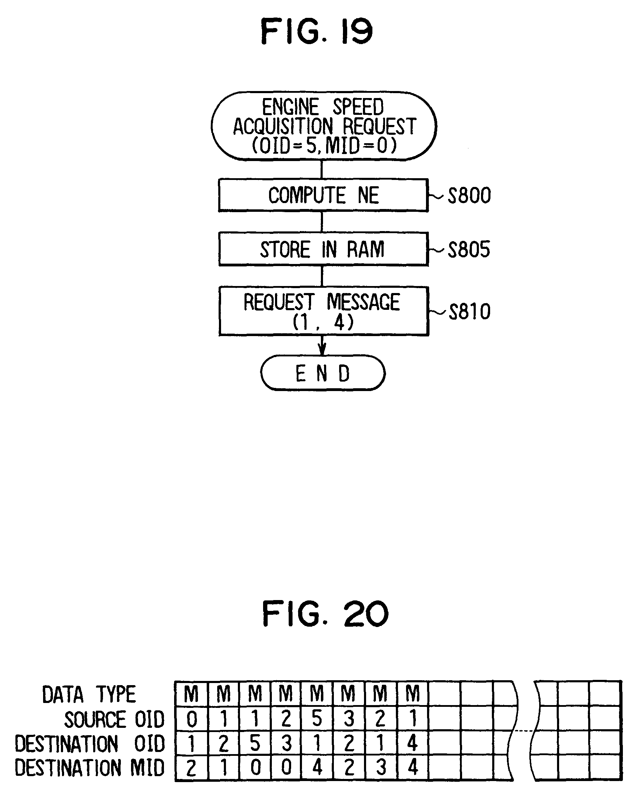

The crank sensor object OB5 has an engine rotational speed acquisition request method shown in Fig. 19. The engine rotational speed acquisition request method is executed in response to a message (5, 0) sent in the message transmission (3) shown in Fig. 3 as a message serving as a request to acquire a rotational speed of the engine.

The execution start address of each of the objects OB1 to OB5 is cataloged in advance in the connection information data base 16 by being associated with an OID identifying the object and an MID identifying a method of the object as shown in Fig. 10.

Next, details of processing carried out by the CPU 3 are explained.

First of all, processing of an object other than the objects OB1 to OB5 represented by a flow diagram shown in Fig. 11 is described. The processing is processing of an object OB0 for determining a timing of control of the idle rotation speed. It should be noted that, in the following description, no message block is assumed to exist in the object message storage unit 12 at the time the execution of this processing is started. It is also assumed that there are a sufficiently large number of free memory blocks in the free memory block unit 14 so that the result of the determination acquired at S100 of the message queuing process is always an acknowledgment.

As shown in Fig. 11, the flow diagram representing the execution of the processing begins with S300 at which a request to start logging is made and the logging request flag FG is set to indicate that an execution history is to be recorded. Then, at S310, a request to transmit a message (1, 2) is issued.

Thereby, the message queuing process shown in Fig. 8 is carried out to catalog the message (1, 2) in the queue in the object message storage unit 12.

Specifically, at S110 of the flow diagram shown in Fig. 8, a free memory block is acquired from the head of the queue in the free memory block unit 14. At S120, the message (1, 2) is written into the free memory block acquired from the free memory block unit 14. At S130, the memory block with the message (1, 2) written thereto is cataloged in the queue of the object message storage unit 12 as a message block. As a result, the object message storage unit 12 now has only one cataloged message block with the message (1, 2) written thereto in the queue. That is, one message (1,2) is stored in the object message storage unit 12.

Then, the message queuing process proceeds to S140 to determine whether a logging request exists. Since a request to start logging has been made at S300 of the flow diagram shown in Fig. 11, the result of the determination indicates that a logging request exists. In this case, the processing proceeds to S150 to record information consisting of a transmission source OID of 0, a transmission destination OID of 1 and a transmission destination MID of 2 in the log storage unit 20 as an event in an execution history as shown in Fig. 20.

When the process to catalog the message (1, 2) in the queue as described above is finished, the control of processing execution is returned to the processing represented by the flow diagram shown in Fig. 11. At S320, a request to deliver the message is made. Upon this request, the message delivery processing represented by the flow diagram shown in Fig. 9 is carried out to deliver the message (1, 2) cataloged in the queue of the object message storage unit 12.

Specifically, the flow diagram shown in Fig. 9 begins with S210 to determine whether a message exists in the queue in the object message storage unit 12, that is, whether a message block can be acquired from the object message storage unit 12. In this case, since the message (1, 2) exists in the queue, the result of the determination at S210 is YES, causing the processing to go on to S220 at which a message block is acquired from the head of the queue in the object message storage unit 12 and the contents of the message (1, 2) stored in the message block are read out. Next, at S230, the message block used for storing the message (1, 2) so far is returned to the free memory block unit 14 as a free memory block.

Then, at S240, the connection information data base 16 is searched for an execution start address A12 in the ROM 5 for storing the idle throttle setting start request method of the ISC object OB1 which corresponds to the contents of the message (1, 2) read out at S220. Subsequently, at S250, the idle throttle setting start request method starting at the execution start address A12 shown in Fig. 10 is called.

As a result, the message (1, 2) is delivered and the execution of the idle throttle setting start request method represented by the flow diagram shown in Fig. 12 is started.

As shown in Fig. 12, the flow diagram representing the execution of the idle throttle setting start request method begins with S400 to determine whether it is an idle time, that is, whether the engine is in an idle running state. If it is not an idle time, that is, if the result of the determination at S400 is NO, the execution of the idle throttle setting start request method is finished without doing anything. The control of the processing execution is then returned to the processing represented by the flow diagram shown in Fig. 11 to end the whole processing. If it is an idle time, that is, if the result of the determination at S400 is YES, on the other hand, the method proceeds to S405 at which a request to transmit a message (2, 1) is made.

Since the request to transmit the message (2, 1) is made, the message queuing process represented by the flow diagram shown in Fig. 8 is carried out. Much like the message (1, 2), the message (2, 1) is cataloged in the queue of the object message storage unit 12 at S110 to S130.

Then, the message queuing process proceeds to S140 to determine whether a logging request exists. Since the logging request exists, the processing proceeds to S150 to record information consisting of a transmission source OID of 1, a transmission destination OID of 2 and a transmission destination MID of 1 in the log storage unit 20 as an event in an execution history as shown in Fig. 20.

When the process to catalog the message (2, 1) in the queue as described above is finished, the control of processing execution is returned to the idle throttle setting start request method represented by the flow diagram shown in Fig. 12. At S410, a request to transmit a message (5, 0) is made.

Upon this request, the message queuing process represented by the flow diagram shown in Fig. 8 is carried out. Much like the message (1, 2), the message (5, 0) is cataloged in the queue of the object message storage unit 12 at S110 to S130. As a result, two messages, namely, the messages (2, 1) and (5, 0) are now stored in the object message storage unit 12 in the following order: message (2,1) . message (5, 0).

Then, the message queuing process proceeds to S140 to determine whether a logging request exists. Since the logging request exists, the processing proceeds to S150 to record information consisting of a transmission source OID of 1, a transmission destination OID of 5 and a transmission destination MID of 0 in the log storage unit 20 as an event in an execution history as shown in Fig. 20.

When the process to catalog the message (5, 0) in the queue as described above is finished, the control of processing execution is once returned to the idle throttle setting start request method represented by the flow diagram shown in Fig. 12. Then, as the processing of the idle throttle setting start request method is completed, the message delivery processing represented by the flow diagram shown in Fig. 9 is carried out to deliver one of the two messages in the queue of the object message storage unit 12, namely, the message (2, 1) which was stored first.

Specifically, at S220 of the flow diagram shown in Fig. 9, a message block is acquired from the head of the queue in the object message storage unit 12 and the contents of the message (2, 1) stored in the message block are read out. Next, at S230, the message block used for storing the message (2, 1) so far is returned to the free memory block unit 14 as a free memory block. Then, at S240, the connection information data base 16 is searched for an execution start address A21 in the ROM 5 for storing the coolant temperature acquisition request method of the coolant temperature sensor object OB2 which corresponds to the contents of the message (2, 1) read out at S220. Subsequently, at S250, the coolant temperature acquisition request method starting at the execution start address A21 shown in Fig. 10 is called.

As a result, the message (2, 1) is delivered and the execution of the coolant temperature acquisition request method represented by the flow diagram shown in Fig. 15 is started.

As shown in Fig. 15, the flow diagram representing the execution of the coolant temperature acquisition request method begins with S500 at which a request to transmit a message (3, 0) is made. Upon this request, the message queuing process represented by the flow diagram shown in Fig. 8 is carried out. The message (3, 0) is cataloged in the queue of the object message storage unit 12 in the same way as the procedure described above. As a result, two messages, namely, the messages (5, 0) and (3, 0) are now stored in the object message storage unit 12 in the following order: message (5,0) → message (3, 0).

Then, the message queuing process proceeds to S140 to determine whether a logging request exists. Since the logging request exists, the processing proceeds to S150 to record information consisting of a transmission source OID of 2, a transmission destination OID of 3 and a transmission destination MID of 0 in the log storage unit 20 as an event in an execution history as shown in Fig. 20.

When the process to catalog the message (3, 0) in the queue described above is finished, the control of processing execution is returned to the coolant temperature acquisition request method represented by the flow diagram shown in Fig. 15. Then, as the processing of the coolant temperature acquisition request method is completed, the message delivery processing represented by the flow diagram shown in Fig. 9 is carried out to deliver one of the two messages in the queue of the object message storage unit 12, namely, the message (5, 0) which was stored earlier.

Specifically, at S220 of the flow diagram shown in Fig. 9, a message block is acquired from the head of the queue in the object message storage unit 12 and the contents of the message (5, 0) stored in the message block are read out. Next, at S230, the message block used for storing the message (5, 0) so far is returned to the free memory block unit 14 as a free memory block. Then, at S240, the connection information data base 16 is searched for an execution start address A50 in the ROM 5 for storing the engine rotational speed acquisition request method of the crank sensor object OB5 which corresponds to the contents of the message (5, 0) read out at S220. Subsequently, at S250, the engine rotational speed acquisition request method starting at the execution start address A50 shown in Fig. 10 is called.

As a result, the message (5,0) is delivered and the execution of the engine rotational speed acquisition request method represented by the flow diagram shown in Fig. 19 is started.

As shown in Fig. 19, the flow diagram representing the execution of the engine rotational speed acquisition request method begins with S800 at which the rotational speed of the engine is computed from a signal generated by the crank sensor. Then, the method proceeds to S805 at which the rotational speed of the engine computed at S800 is stored in the RAM 6. Then, at S810, a request to transmit a message (1, 4) is made.

Upon this request, the message queuing process represented by the flow diagram shown in Fig. 8 is carried out. The message (1, 4) is cataloged in the queue of the object message storage unit 12 in the same way as the procedure described above. As a result, two messages, namely, the messages (3, 0) and (1, 4) are now stored in the object message storage unit 12 in the following order: message (3,0) → message (1, 4).

Then, the message queuing process proceeds to S140 to determine whether a logging request exists. Since the logging request exists, the processing proceeds to S150 to record information consisting of a transmission source OID of 5, a transmission destination OID of 1 and a transmission destination MID of 4 in the log storage unit 20 as an event in an execution history as shown in Fig. 20.

When the process to catalog the message (1, 4) in the queue as described above is finished, the control of processing execution is returned to the engine rotational speed acquisition request method represented by the flow diagram shown in Fig. 19. Then, as the processing of the engine rotational speed acquisition request method is completed, the message delivery processing represented by the flow diagram shown in Fig. 9 is carried out to deliver one of the two messages in the queue of the object message storage unit 12, namely, the message (3, 0) which was stored earlier.

Specifically, at S220 of the flow diagram shown in Fig. 9, a message block is acquired from the head of the queue in the object message storage unit 12 and the contents of the message (3, 0) stored in the message block are read out. Next, at S230, the message block used for storing the message (3, 0) so far is returned to the free memory block unit 14 as a free memory block. Then, at S240, the connection information data base 16 is searched for an execution start address A30 in the ROM 5 for storing the coolant temperature digital value acquisition request method of the A/D converter object OB3 which corresponds to the contents of the message (3, 0) read out at S220. Subsequently, at S250, the coolant temperature digital value acquisition request method starting at the execution start address A30 shown in Fig. 10 is called.

As a result, the message (3, 0) is delivered and the execution of the coolant temperature digital value acquisition request method represented by the flow diagram shown in Fig. 17 is started.

As shown in Fig. 17, the flow diagram representing the execution of the coolant temperature digital value acquisition request method begins with S600 at which an analog signal generated by the coolant temperature sensor is converted into a digital value. Then, at S605, the digital value acquired at a result of the conversion at S600 is stored in the RAM 6. Then, at S610, a request to transmit a message (2, 2) is made.

Upon this request, the message queuing process represented by the flow diagram shown in Fig. 8 is carried out. The message (2, 2) is cataloged in the queue of the object message storage unit 12 in exactly the same way as the procedure described above. As a result, two messages, namely, the messages (1, 4) and (2, 2) are now stored in the object message storage unit 12 in the following order: message (1,4)→ message (2, 2).

Then, the message queuing process proceeds to S140 to determine whether a logging request exists. Since the logging request exists, the processing proceeds to S150 to record information consisting of a transmission source OID of 3, a transmission destination OID of 2 and a transmission destination MID of 2 in the log storage unit 20 as an event in an execution history as shown in Fig. 20.

When the process to catalog the message (2, 2) in the queue as described above is finished, the control of processing execution is returned to the coolant temperature digital value acquisition request method represented by the flow diagram shown in Fig. 17. Then, as the processing of the coolant temperature digital value acquisition request method is completed, the message delivery processing represented by the flow diagram shown in Fig. 9 is carried out to deliver one of the two messages in the queue of the object message storage unit 12, namely, the message (1, 4) which was stored earlier.

Specifically, at S220 of the flow diagram shown in Fig. 9, a message block is acquired from the head of the queue in the object message storage unit 12 and the contents of the message (1, 4) stored in the message block are read out. Next, at S230, the message block used for storing the message (1, 4) so far is returned to the free memory block unit 14 as a free memory block. Then, at S240, the connection information data base 16 is searched for an execution start address A14 in the ROM 5 for storing the engine rotational speed acquisition response method of the ISC object OB1 which corresponds to the contents of the message (1, 4) read out at S220. Subsequently, at S250, the engine rotational speed acquisition response method starting at the execution start address A14 shown in Fig. 10 is called.

As a result, the message (1, 4) is delivered and the execution of the engine rotational speed acquisition response method represented by the flow diagram shown in Fig. 14 is started.

As shown in Fig. 14, the flow diagram representing the execution of the engine rotational speed acquisition response method begins with S450 to determine whether the acquisition of a coolant temperature has been completed, that is, whether the most recent coolant temperature has been stored in the RAM 6. If the acquisition of a coolant temperature has been completed, that is, if the result of the determination at S450 is YES, for example, the method proceeds to S455 at which the most recent rotational speed of the engine and the most recent coolant temperature are read out from the RAM 6. Then, at S460, a target throttle angle for setting the rotational speed of the engine at an optimum idle rotational speed is computed from the most recent rotational speed of the engine and the most recent coolant temperature which were read out from the RAM 6 at S455. Subsequently, at S465, the target throttle angle computed at S460 is stored in the RAM 6. Then, at S470, a request to transmit a message (4, 4) is made.

In the case of this embodiment, however, the coolant temperature digital value acquisition response method of the coolant temperature object OB2 for preserving the most recent coolant temperature in the RAM 6 has not been executed yet. Thus, the result of the determination at S450 is NO indicating that the acquisition of a coolant temperature has not been completed. In this case, the execution of the engine rotational speed acquisition method is finished without carrying out the pieces of processing at S455 to S470.

Then, as the processing of the engine rotational speed acquisition response method is completed, the message delivery processing represented by the flow diagram shown in Fig. 9 is carried out to deliver the message (2, 2) in the queue of the object message storage unit 12.

Specifically, at S220 of the flow diagram shown in Fig. 9, a message block is acquired from the head of the queue in the object message storage unit 12 and the contents of the message (2, 2) stored in the message block are read out. In this case, only a message block for storing the message (2, 2) exists in the queue. Next, at S230, the message block used for storing the message (2, 2) so far is returned to the free memory block unit 14 as a free memory block. Then, at S240, the connection information data base 16 is searched for an execution start address A22 in the ROM 5 for storing the coolant temperature digital value acquisition response method of the coolant temperature sensor object OB2 which corresponds to the contents of the message (2, 2) read out at S220. Subsequently, at S250, the coolant temperature digital value acquisition response method starting at the execution start address A22 shown in Fig. 10 is called.

As a result, the message (2, 2) is delivered and the execution of the coolant temperature digital value acquisition response method represented by the flow diagram shown in Fig. 16 is started.

As shown in Fig. 16, the flow diagram representing the execution of the coolant temperature digital value acquisition response method begins with S510 to read out a digital value stored in the RAM 6 at S605 of the flow diagram representing the execution of the coolant temperature digital value acquisition request method as shown in Fig. 17. Then, at S515, the digital value read out from the RAM 6 at S510 is converted into a coolant temperature (expressed in terms of degrees Celsius).

Then, at S520, the coolant temperature acquired as a result of the conversion at S515 is saved in the RAM 6. Subsequently, at S525, a request is made to transmit a message (1, 3).

Thereby, the message queuing process shown in Fig. 8 is carried out to catalog the message (1, 3) in the queue in the object message storage unit 12 in the same way as the procedure described above. As a result, the object message storage unit 12 now has only one cataloged message block with the message (1, 3) written thereto in the queue. That is, one message (1, 3) is stored in the object message storage unit 12.

Then, the message queuing process proceeds to S140 to determine whether a logging request exists. Since the logging request exists, the processing proceeds to S150 to record information consisting of a transmission source OID of 2, a transmission destination OID of 1 and a transmission destination MID of 3 in the log storage unit 20 as an event in an execution history as shown in Fig. 20.

When the process to catalog the message (1, 3) in the queue as described above is finished, the control of processing execution is returned to the coolant temperature digital value acquisition response method represented by the flow diagram shown in Fig. 16. Then, as the processing of the coolant temperature digital value acquisition response method is completed, the message delivery processing represented by the flow diagram shown in Fig. 9 is carried out to deliver the message (1, 3) cataloged in the queue of the object message storage unit 12.

Specifically, at S220 of the flow diagram shown in Fig. 9, a message block is acquired from the head of the queue in the object message storage unit 12 and the contents of the message (1, 3) stored in the message block are read out. Next, at S230, the message block used for storing the message (1, 3) so far is returned to the free memory block unit 14 as a free memory block. Then, at S240, the connection information data base 16 is searched for an execution start address A13 in the ROM 5 for storing the coolant temperature acquisition response method of the ISC object OB1 which corresponds to the contents of the message (1, 3) read out at S220. Subsequently, at S250, the coolant temperature acquisition response method starting at the execution start address A13 shown in Fig. 10 is called.

As a result, the message (1, 3) is delivered and the execution of the coolant temperature acquisition response method represented by the flow diagram shown in Fig. 13 is started.

As shown in Fig. 13, the flow diagram representing the execution of the execution of the coolant temperature acquisition response method begins with S420 to determine whether the acquisition of a rotational speed of the engine has been completed, that is, whether the most recent rotational speed of the engine has been stored in the RAM 6. If the acquisition of a rotational speed of the engine has not been completed, that is, if the result of the determination at S420 is NO, the coolant temperature acquisition response method is finished without doing anything.

At this point in this embodiment, however, the most recent rotational speed of the engine has been stored in the RAM 6 at S805 of the flow diagram shown in Fig. 19 representing the engine rotational speed acquisition request method. Thus, at S420, the acquisition of a rotational speed of the engine is found completed, that is, the result of the determination at S420 is YES.

If the acquisition of a rotational speed of the engine has been completed, that is, if the result of the determination at S420 is YES, the method proceeds to S425 at which the most recent rotational speed of the engine and the most recent coolant temperature are read out from the RAM 6. Then, at S430, a target throttle angle for setting the rotational speed of the engine at an optimum idle rotational speed is computed from the most recent rotational speed of the engine and the most recent coolant temperature which were read out from the RAM 6 at S425. Subsequently, at S435, the target throttle angle computed at S430 is stored in the RAM 6. Then, at S440, a request to transmit a message (4, 4) is made.

Thereby, the message queuing process shown in Fig. 8 is carried out to catalog the message (4, 4) in the queue in the object message storage unit 12 in the same way as the procedure described above. As a result, the object message storage unit 12 now has only one cataloged message block with the message (4, 4) written thereto in the queue. That is, one message (4, 4) is stored in the object message storage unit 12.

Then, the message queuing process proceeds to S140 to determine whether a logging request exists. Since the logging request exists, the processing proceeds to S150 to record information consisting of a transmission source OID of 1, a transmission destination OID of 4 and a transmission destination MID of 4 in the log storage unit 20 as an event in an execution history as shown in Fig. 20.

When the process to catalog the message (4, 4) in the queue as described above is finished, the control of processing execution is returned to the coolant temperature acquisition response method represented by the flow diagram shown in Fig. 13. Then, as the processing of the coolant temperature acquisition response method is completed, the message delivery processing represented by the flow diagram shown in Fig. 9 is carried out to deliver the message (4, 4) cataloged in the queue of the object message storage unit 12.

Specifically, at S220 of the flow diagram shown in Fig. 9, a message block is acquired from the head of the queue in the object message storage unit 12 and the contents of the message (4,4) stored in the message block are read out. Next, at S230, the message block used for storing the message (4, 4) so far is returned to the free memory block unit 14 as a free memory block. Then, at S240, the connection information data base 16 is searched for an execution start address A44 in the ROM 5 for storing the throttle setting request method of the throttle control object OB4 which corresponds to the contents of the message (4, 4) read out at S220. Subsequently, at S250, the throttle setting request method starting at the execution start address A44 shown in Fig. 10 is called.

As a result, the message (4, 4) is delivered and the execution of the throttle setting request method represented by the flow diagram shown in Fig. 18 is started.

As shown in Fig. 18, the flow diagram representing the execution of the throttle setting request method begins with S700 to read out the target throttle angle which was stored in the RAM 6 at S435 of the flow diagram shown in Fig. 13 to represent the coolant temperature acquisition response method. Then, at S705, throttle control is executed to adjust the opening of the throttle valve to the target throttle angle. After the execution of the throttle control at S705, the throttle setting request method is finished.

Then, the message delivery processing represented by the flow diagram shown in Fig. 9 is carried out. The flow diagram representing the execution of the message delivery processing begins with S210 to determine whether a message exists in the queue in the object message storage unit 12. In this case since no message is found in the queue in the object message storage unit 12, that is, since the result of the determination at S210 is NO, the message delivery control unit 10 returns to the message reception wait state.

As a result, the control of the processing execution is returned to the processing represented by the flow diagram shown in Fig. 11. At S330, a request to end the logging process is made and the logging request flag FG is reset before ending the processing. At the end of this processing, all other pieces of processing are finished as well for the time being.

As described above, in the ECU 1 implemented by the first embodiment, when the OB0 for carrying out the processing represented by the flow diagram shown in Fig. 11 issues the message (1, 2), the ISC object OB1 issues the messages (2, 1) and (5, 0) sequentially one after another. The messages (2, 1) and (5, 0) cause the coolant temperature sensor object OB2 to issue the message (3, 0) and the crank sensor object OB5 to issue the message (1, 4). Then, the A/D converter object OB3 issues the message (2, 2), the coolant temperature sensor object OB2 issues the message (1, 3) and the ISC object OB1 issues the message (4, 4). As a result, information on messages is recorded in the log storage area as events in an execution history like the one shown in Fig. 20.

According to the ECU 1 implemented by the first embodiment with a configuration described above, the following effects 1 to 5 are exhibited.
1. In the typical control of the idle rotational speed, when any one of the objects OB0 to OB5 issues a message to request another object to carry out processing, the contents of the message are stored in the log storage unit 20 (that is, a storage area in the RAM 6) as an event in an execution history of the control processing in the ECU 1. Thus, in a process to debug a control program, it is possible to easily recognize which one of a plurality of objects composing the control program has been executed as part of the control processing of the electronic control apparatus 1.
   As a result, in case a problem is encountered in an operation, an object raising the problem can be identified with ease. In addition, it is also possible to detect a problem of inadvertent execution of an object supposed to be inactive according to the design or a problem of an inactive object which is supposed to be executed according to the design.
2. Since the message delivery control unit 10 records the contents of a message as an event in an execution history with a timing of receiving the message from any one of the objects OB0 to OB5 or a timing of receiving a request to transmit the message, it is possible to record the OID of a transmission source (that is, information indicating a unit processing means outputting the message) along with the contents of the message as an event in an execution history with ease.
3. A message includes an OID (the OID of a transmission destination) and an MID (the MID of a method of a transmission destination). A combination of the OID and the MID is stored in the connection information data base 16 provided in the ECU 1 along with an execution start address by associating the combination with the address. An execution start address is information on a storage location in the ROM 5 at which a method identified by the MID of an object indicated by the OID is stored in the ROM 5. That is, an execution start address is the start address of the method. Then, in the message delivery processing represented by the flow diagram shown in Fig. 9, the execution start address of a method corresponding to an OID and an MID of a message read out from the object message storage unit 12 is identified by searching the connection information data base 16. Control of execution is then transferred to the method which is a method of an object serving as the transmission destination of the message read out from the object message storage unit 12.
   Thus, when the storage location of an object in the ROM 5 changes due to modification of the object accompanying alteration of the design of a program, it is possible to keep up with such a change in storage location by merely correcting the contents of the connection information data base 16. That is, the independence of each object is enhanced and the design of a program can thus be changed with ease.
4. In addition, since the contents of a message stored in a storage area in the RAM 6 as an event in an execution history include an OID and an MID, it is possible to easily recognize an object requested to carry out processing. As a result, the control program can be debugged with ease.
5. Furthermore, since an identification code of an object issuing a message, namely, the OID of a transmission source is also recorded in the log storage area, it possible to provide a desirable ECU 1 wherein, during a process of debugging the control program, it is easy to trace the processing of control processing carried out in the ECU 1.

### (Second Embodiment)

Next, a second embodiment of the present invention is explained. The second embodiment is different from the first embodiment as follows.

As described above, in the case of the ECU 1 implemented by the first embodiment, information on a message is stored in the log storage unit 20 as an event in an execution history with a timing of cataloging the message in the queue of the object message storage unit 12, that is, with a timing of receiving a request to transmit the message or a timing of receiving the message. In the case of the ECU 1 implemented by the second embodiment, on the other hand, information on a message is stored in the log storage unit 20 as an event in an execution history with a timing of delivering the message from the object message storage unit 12 to an object serving as a transmission destination, that is, with a timing of reading out the message to be delivered from the object message storage unit 12.

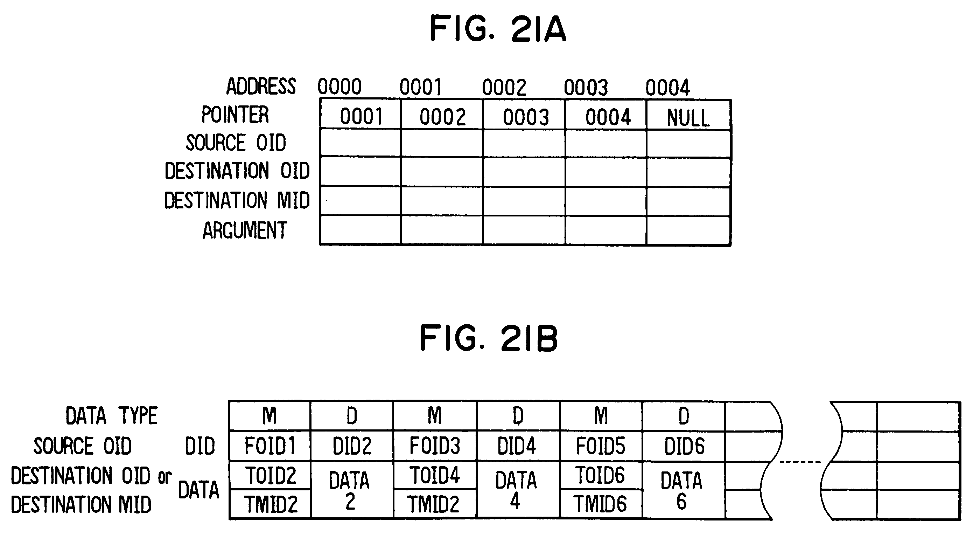

In addition, in the case of the second embodiment, a transmission source OID field for storing an OID identifying an object serving as the transmission source of a message is added to fields of a pointer, the OID of a transmission destination, the MID of a method of a transmission destination and an argument for each memory block in the message storage area of the RAM 6 as shown in Fig. 21A.

That is, the OID of a transmission source for identifying an object serving as the transmission source of a message can be stored in the object message storage unit 12 in addition to the contents of the message consisting of the OID of a transmission destination, the MID of a method of a transmission destination and an argument. As described above, information on a message is stored in the log storage unit 20 as an event in an execution history with a timing of delivering the message from the object message storage unit 12 to an object serving as a transmission destination, that is, with a timing of reading out the message to be delivered from the object message storage unit 12.

In addition, in the case of the ECU 1 implemented by the second embodiment, information on control data in a method activated by a delivery of a message is stored in the log storage unit 20 with an end timing of the method, that is, a timing of delivering a next message. As a result, information on a message and information on control data are recorded in the log storage area as shown in Fig. 21B.

As shown in Fig. 21B, information on control data includes a data identification (DID) used for identifying control data and the value of the control data which is stored in the RAM 6 by execution of the method. The character D recorded in a block as the data type indicates that information on control data is recorded in the block of the log storing area as an event in an execution history.

In the example shown in Fig. 21B, for instance, information on a message recorded in the first block of the log recording area indicates that a message was sent from an object with an OID of FOID1 to an object with an OID of TOID2 and an MID of TMID2 or indicates that a method identified by an MID of TMID2 of an object identified by an OID of TOID2 was activated. As a result of the execution of the method activated by the message, a value DATA2 of control data identified by a DID of DID2 is recorded.

Similarly, as a result of the execution of a method identified by an MID of TMID4 of an object identified by an OID of TOID4, a value DATA4 of control data identified by a DID of DID4 is recorded. Likewise, as a result of the execution of a method identified by an MID of TMID6 of an object identified by an OID of TOID6, a value DATA6 of control data identified by an DID of DID6 is recorded.

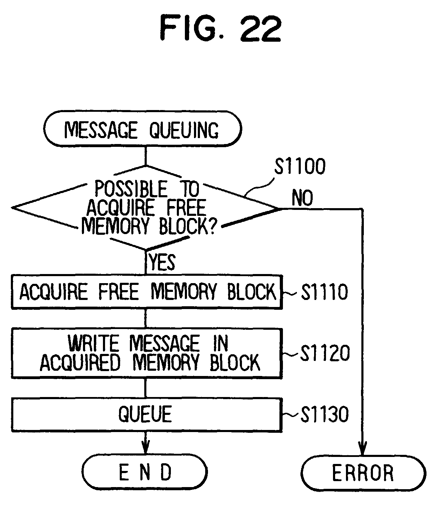

The following description explains processing carried out in the ECU 1 implemented by the second embodiment to record information on a message and information on control data as an event in an execution history by referring to flow diagrams shown in Figs. 22 to 24.

In the first place, Fig. 22 shows a flow diagram representing a message queuing process carried out in the ECU 1 implemented by the second embodiment in place of the flow diagram shown in Fig. 8 to represent the message queuing process carried out in the ECU 1 implemented by the first embodiment.

As shown in Fig. 22, the flow diagram representing a message queuing process carried out in the ECU 1 implemented by the second embodiment begins with S1100 to determine whether it is possible to acquire a free memory block. As a matter of fact, pieces of processing carried out at S1100 to S1130 correspond to and are similar to those carried out at S100 to S130 of the flow diagram shown in Fig. 8 to represent the message queuing process carried out by the first embodiment, so that it is not necessary to explain them. It should be noted, however, that the message queuing process carried out by the second embodiment is different from the message queuing process represented by the flow diagram shown in Fig. 8 in that the contents of a message written into a memory block at S1120 include the OID of the transmission source in addition to the OID of the transmission destination and the MID of a method of the transmission destination. In addition, after a message is cataloged in the queue at S1130, the message queuing process is finished right away.

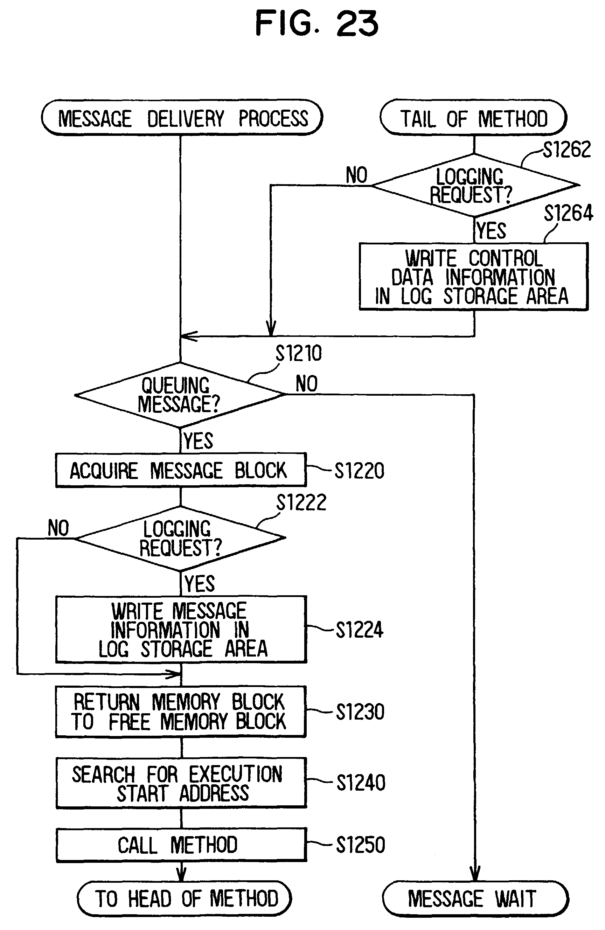

In the second place, Fig. 23 shows a flow diagram representing a message delivery processing carried out in the ECU 1 implemented by the second embodiment in place of the flow diagram shown in Fig. 9 to represent the message delivery processing carried out in the ECU 1 implemented by the first embodiment.

The message delivery processing is also carried out when a request to deliver a message is made by any one of the objects or when execution of a method of any object is completed. When a request to deliver a message is made by any one of the objects, the flow diagram shown in Fig. 23 begins with S1210 to determine whether there is a message in the queue of the object message storage unit 12, that is, whether it is possible to acquire a message block from the object message storage unit 12. If the result of the determination at S1210 is NO indicating that there is no message in the queue of the object message storage unit 12, the message delivery control unit 10 returns to the message reception wait state as shown by (i) in Fig. 7 without doing anything.

If the result of the determination at S1210 is YES indicating that there is a message in the queue of the object message storage unit 12, on the other hand, the processing proceeds to S1220 at which a message block is acquired from the object message storage unit 12 and the contents of the message consisting the OID and of the transmission destination and the MID of a method of the transmission destination are read out from the message block. It should be noted that since the processing carried out at S1220 is the same as the processing of S220 of the flow diagram shown in Fig. 9 to represent the message delivery processing carried out in the first embodiment, detail explanation of this processing is omitted.

Then, the processing proceeds to S1222 to determine whether a logging request has been made, that is, whether an execution history is to be recorded. Since the determination is the same as the processing carried out at S140, explanation of its details is omitted. If the result of the determination of S1222 is YES indicating that a logging request has been made, the processing proceeds to S1224 at which information on the message is recorded in the log storage unit 20 as an event in an execution history. Then, the processing proceeds to S1230. If the result of the determination of S1222 is NO indicating that no logging request has been made, on the other hand, the processing goes on directly to S1230, skipping S1224.

At S1230, the message block acquired at S1220 is returned to the free memory block unit 14 as a free memory block which is put at the tail of the queue of free memory blocks in the free memory block unit 14. Then, at S1240, the connection information data base 16 is searched for an execution start address, that is, the start address of an area in the ROM 5 for storing the method of the object which corresponds to the contents of the message consisting of the OID and the MID read out at S1220. Subsequently, at S1250, a method starting at the execution start address found at S1240 is called. As a result, the execution control of the program by the CPU 3 is transferred to the execution start address of the method of the object which corresponds to the contents of the message read out at S1220. That is, the execution of the method of the object is started when the message is delivered to this object. When the execution of the processing of the method is completed, the processing continues to S1262.

As described above, the execution of the method of any object in response to delivery of the message is followed by activation of the message delivery processing represented by the flow diagram shown in Fig. 23 at S1262 to determine whether a logging request has been made. Since the determination is the same as the processing carried out at S140, explanation of its details is omitted. If the result of the determination of S1262 is YES indicating that a logging request has been made, the processing proceeds to S1264 to record information on control data stored in the RAM 6 up to the processing transition to S1262 in the log storage unit 20 as an event in an execution history.

If the result of the determination of S1262 is NO indicating that no logging request has been made, on the other hand, the processing goes on directly to S1210, skipping S1264.

It should be noted that the processing carried out at S1224 and S1264 functions as a part of history recording means.

As described above, in the case of the ECU 1 implemented by the second embodiment, the contents of a message are read out from a message block and information on the message is recorded as an event in an execution history not during the processing to catalog the message in the queue of the object message storage unit 12 but during the processing to deliver the message to an object, that is, during the message delivery processing represented by the flow diagram shown in Fig. 23. Then, when the execution of a method to deliver the message is finished, information on control data is recorded into the log storage unit 20 as an event in an execution history before the delivery of a next message, that is, prior to the execution of a next method.

Specifically, when a request to transmit a message (1, 2) is made at S310 after a logging request has been issued at S300 of the flow diagram shown in Fig. 11, the message queuing process represented by the flow diagram shown in Fig. 22 is carried out. At S1110 to S1130 of the flow diagram, the message (1, 2) issued by an object serving as a transmission source with an OID of 0 is cataloged in the queue of the object message storage unit 12. Then, control of processing execution is returned to the processing represented by the flow diagram shown in Fig. 11. At S320 of the flow diagram, a request to deliver the message is made.

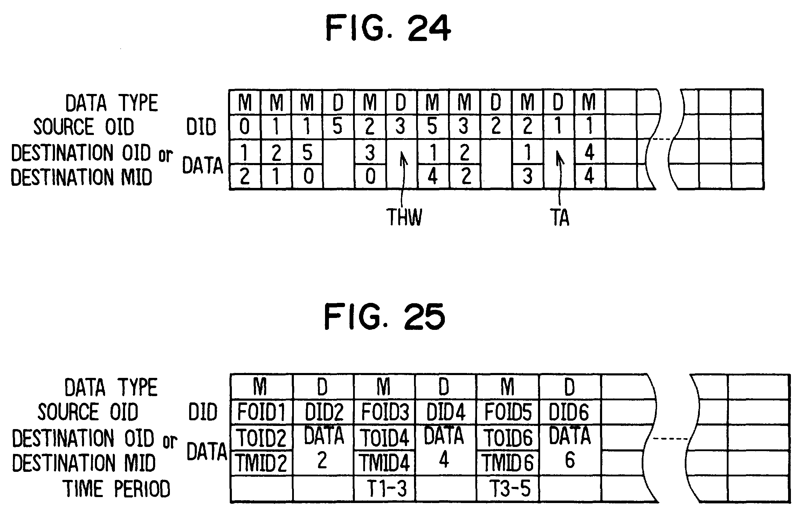

As the request to deliver the message is made, the message delivery processing represented by the flow diagram shown in Fig. 23 is carried out. In this case, since a message exists in the queue of the object message storage unit 12, the result of the determination at S1210 is YES causing the processing to go on to S1220 at which a message block is acquired. Then, since a logging request was made, the determination of S1222 is YES causing the processing to go on to S1224 at which information on the message (1, 2) at the head of the queue of the object message storage unit 12 is recorded into the log storage unit 20 as an event in an execution history. That is, a transmission source OID of 0, a transmission destination OID of 1 and a transmission destination MID of 2 are recorded in the log storage unit 20 as an event in an execution history as shown in Fig. 24.

Then, as the message (1, 2) is delivered at S1250, the execution of the idle throttle setting start request method represented by the flow diagram shown in Fig. 12 is started. As the execution of the idle throttle setting start request method is completed, the message delivery processing represented by the flow diagram shown in Fig. 23 is again executed at S1262 to determine whether a logging request has been made. Since a logging request has been made, the result of the determination of S1262 is YES. In this case, the processing proceeds to S1264 to record information on control data as an event in an execution history. Since control data to be recorded as an event in an execution history was not stored in the RAM 6 during the execution of the idle throttle setting start request method, however, no event in the execution history is actually recorded.

Then, the processing proceeds to S1210. Since messages (2, 1) and (5, 0) have been cataloged sequentially one after another along with their transmission source OIDs of 1 in the queue of the object message storage unit 12 during the execution of the throttle setting start request method, the result of the determination at S1210 is an acknowledgment. Thus, the processing proceeds to S1224 at which information on the message (2, 1) is stored in the log storage unit 20 as an event in an execution history. Specifically, a transmission source OID of 1, a transmission destination OID of 2 and a transmission destination MID of 1 are stored in the log storage unit 20 as shown in Fig. 24.

Then, as the message (2, 1) is delivered at S1250, the execution of the coolant temperature acquisition request method represented by the flow diagram shown in Fig. 15 is started. As the execution of the coolant temperature acquisition request method is completed, the message delivery processing represented by the flow diagram shown in Fig. 23 is again executed at S1262 only to find out that the result of the determination of S1262 is an acknowledgment. In this case, the processing proceeds to S1264 to record information on control data as an event in an execution history. Since control data to be recorded as an event in an execution history was not stored in the RAM 6 during the execution of the coolant temperature acquisition request method, however, no event in the execution history is actually recorded.

Then, at S1224, information on the message (5, 0) is stored in the log storage unit 20 as an event in an execution history. Specifically, a transmission source OID of 1, a transmission destination OID of 5 and a transmission destination MID of 0 are stored in the log storage unit 20 as shown in Fig. 24.

Then, as the message (5, 0) is delivered at S1250, the execution of the engine rotational speed acquisition request method represented by the flow diagram shown in Fig. 19 is started. As the execution of the engine rotational speed acquisition request method is completed, the message delivery processing represented by the flow diagram shown in Fig. 23 is again executed at S1262 only to find out that the result of the determination of S1262 is an acknowledgment. In this case, the processing proceeds to S1264 at which information on control data is recorded as an event in an execution history. Since a rotational speed of the engine was stored in the RAM 6 during the execution of the engine rotational speed acquisition request method, the value of the engine rotational speed and the DID thereof are recorded in the log storage unit 20 as shown in Fig. 24.

Then, the processing proceeds to S1210. Since a message (3, 0) has been cataloged along with its transmission source OID of 2 in the queue of the object message storage unit 12 during the execution of the coolant temperature acquisition request method, the result of the determination at S1210 is an acknowledgment. Thus, the processing proceeds to S1224 at which information on the message (3, 0) is stored in the log storage unit 20 as an event in an execution history. Specifically, a transmission source OID of 2, a transmission destination OID of 3 and a transmission destination MID of 0 are stored in the log storage unit 20 as shown in Fig. 24.

Then, as the message (3, 0) is delivered at S1250, the execution of the coolant temperature digital value acquisition request method represented by the flow diagram shown in Fig. 17 is started. As the execution of the coolant temperature digital value acquisition request method is completed, the message delivery processing represented by the flow diagram shown in Fig. 23 is again executed at S1262 only to find out that the result of the determination of S1262 is an acknowledgment. In this case, the processing proceeds to S1264 at which information on control data is recorded as an event in an execution history. Since a value output by the coolant temperature sensor was stored in the RAM 6 during the execution of the coolant sensor digital value acquisition request method, the value output by the coolant temperature sensor and the DID thereof are recorded in the log storage unit 20 as shown in Fig. 24. It should be noted that what is actually stored in the RAM 6 and the log storage unit 20 is a digital value acquired as a result of an A/D conversion of an analog value output by the coolant temperature sensor.

Then, the processing proceeds to S1210. Since a message (1, 4) has been cataloged along with its transmission source OID of 5 in the queue of the object message storage unit 12 during the execution of the engine rotational speed acquisition request method, the result of the determination at S1210 is an acknowledgment. Thus, the processing proceeds to S1224 at which information on the message (3, 0) is stored in the log storage unit 20 as an event in an execution history. Specifically, a transmission source OID of 5, a transmission destination OID of 1 and a transmission destination MID of 4 are stored in the log storage unit 20 as shown in Fig. 24.

Then, as the message (1, 4) is delivered at S1250, the execution of the engine rotational speed acquisition response method represented by the flow diagram shown in Fig. 14 is started. As the execution of the engine rotational speed acquisition response method is completed, the message delivery processing represented by the flow diagram shown in Fig. 23 is again executed at S1262 only to find out that the result of the determination of S1262 is an acknowledgment. In this case, the processing proceeds to S1264 to record information on control data as an event in an execution history. Since control data to be recorded as an event in an execution history was not stored in the RAM 6 during the execution of the engine rotational speed acquisition response method, however, the result of the determination at S450 is a negation and the pieces of processing at S455 to S470 are thus not carried out. As a result, no event in the execution history is actually recorded at S1264 of the present invocation.

Then, the processing proceeds to S1210. Since a message (2, 2) has been cataloged along with its transmission source OID of 3 in the queue of the object message storage unit 12 during the execution of the coolant temperature digital value acquisition request method, the result of the determination at S1210 is an acknowledgment. Thus, the processing proceeds to S1224 at which information on the message (2, 2) is stored in the log storage unit 20 as an event in an execution history. Specifically, a transmission source OID of 3, a transmission destination OID of 2 and a transmission destination MID of 2 are stored in the log storage unit 20 as shown in Fig. 24.

Then, as the message (2, 2) is delivered at S1250, the execution of the coolant temperature digital value acquisition response method represented by the flow diagram shown in Fig. 16 is started. As the execution of the coolant temperature digital value acquisition response method is completed, the message delivery processing is again executed at S1262 only to find out that the result of the determination of S1262 is an acknowledgment. In this case, the processing proceeds to S1264 at which information on control data is recorded as an event in an execution history. Since a coolant temperature was stored in the RAM 6 during the execution of the coolant sensor digital value acquisition response method, the coolant temperature and the DID thereof are recorded in the log storage unit 20 as shown in Fig. 24.

Then, the processing proceeds to S1210. Since a message (1, 3) has been cataloged along with its transmission source OID of 2 in the queue of the object message storage unit 12 during the execution of the coolant temperature digital value acquisition response method, the result of the determination at S1210 is an acknowledgment. Thus, the processing proceeds to S1224 at which information on the message (2, 2) is stored in the log storage unit 20 as an event in an execution history. Specifically, a transmission source OID of 2, a transmission destination OID of 1 and a transmission destination MID of 3 are stored in the log storage unit 20 as shown in Fig. 24.

Then, as the message (1, 3) is delivered at S1250, the execution of the coolant temperature acquisition response method represented by the flow diagram shown in Fig. 13 is started. As the execution of the coolant temperature acquisition response method is completed, the message delivery processing represented by the flow diagram shown in Fig. 23 is again executed at S1262 only to find out that the result of the determination of S1262 is an acknowledgment. In this case, the processing proceeds to S1264 at which information on control data is recorded as an event in an execution history. Since a throttle angle was stored in the RAM 6 during the execution of the coolant sensor digital value acquisition response method, the throttle angle and the DID thereof are recorded in the log storage unit 20 as shown in Fig. 24.

Then, the processing proceeds to S1210. Since a message (4, 4) has been cataloged along with its transmission source OID of 1 in the queue of the object message storage unit 12 during the execution of the engine rotational speed acquisition request method, the result of the determination at S1210 is an acknowledgment. Thus, the processing proceeds to S1224 at which information on the message (4, 4) is stored in the log storage unit 20 as an event in an execution history. Specifically, a transmission source OID of 1, a transmission destination OID of 4 and a transmission destination MID of 4 are stored in the log storage unit 20 as shown in Fig. 24.

Then, as the message (4, 4) is delivered at S1250, the execution of the throttle setting request method represented by the flow diagram shown in Fig. 18 is started. As the execution of the throttle setting request method is completed, the message delivery processing is again executed at S1262 only to find out that the result of the determination of S1262 is an acknowledgment. In this case, the processing proceeds to S1264 to record information on control data as an event in an execution history. Since control data to be recorded as an event in an execution history was not stored in the RAM 6 during the execution of the throttle setting request method, however, no event in the execution history is actually recorded.

Later on, the processing proceeds to S1210 to determine whether a message exists in the queue of the object message storage unit 12. Since there is no more message in the queue, the message delivery control unit 10 enters the message reception wait state.

As a result, control of execution is returned to the processing represented by the flow diagram shown in Fig. 11. At S330, a request to end the logging process is made. In this case, the logging request flag FG is reset before finishing the processing. When this processing is finished, all other pieces of processing are also ended as well for the time being.

As a result, an execution history representing the sequence of pieces of processing, that is, information on messages and information on control data, are recorded in the log storage area as shown in Fig. 24.

According to the ECU 1 implemented by the second embodiment with a configuration described above, there are exhibited effects 6 and 7 described below in addition to effects 1 and 3 to 5 described above.
6. Since values of control data used in methods (or processing operations of unit processing means or processing operations for objects) are recorded in the log storage area as an event in an execution history of control processing in the ECU 1, it is possible to determine whether processing of each object is carried out in accordance with the design with a high degree of precision.
7. Contents of a message are recorded as an event in an execution history with a timing of the message delivery control unit 10 to read out the message from a message storage area in the RAM 6 or a timing of delivering the message. In addition, after the completion of the execution of a method triggered by the delivery of the message but prior to an operation to read out a next message, control data is recorded. As a result, information on control data is recorded into a block following a block for recording information on a message for an object using the control data. Thus, the relation between a message and control data is easy to understand. In addition, the ECU 1 is desirable in that, in a process to debug a control program, the substance of processing carried out in the ECU 1 can be comprehended with ease.

### (Third Embodiment)

Next, a third embodiment of the present invention is described. The third embodiment is different from the second embodiment as follows.

As described above, in the case of the second embodiment, information on a message is recorded in the log storage unit 20 as an event in an execution history with a timing of delivering the message to a predetermined object serving as the transmission destination.

Also in the case of an ECU 1 implemented by the third embodiment, information on a message is recorded with a timing of delivering the message to an object serving as a transmission destination. In addition, at S1224, a time interval between consecutive message deliveries is recorded. The time interval is a time that lapses since the immediately preceding message delivery processing till the execution of the present message delivery processing. As shown in Fig. 25, the log storage area in the RAM 6 includes a storage area used for storing information on time in addition to the storage area for storing the type of data, the OID of a transmission source, the OID of a transmission destination and the MID of a transmission destination. Specifically, the information on time recorded in the log storage area is a period between a timing of the immediately preceding execution of the processing at S1224 and a timing of the current execution of the processing at S1224.

Since a delivery of a message triggers the execution of a method of an object requested to carry out processing by the message, a recorded time interval between consecutive message delivery timings indicates the execution time of the method or a time it takes to execute the method. Thus, as shown in Fig. 25, the execution time of a method is recorded in the log storage area as an event in an execution history in addition to information on a message and information on control data.

In the example shown in Fig. 25, the time interval between the delivery of a message (TOID2, TMID2) from an object with an OID of FOID1 and the delivery of a message (TOID4, TMID4) from an object with an OID of FOID3 is T13. That is, for the latter delivery, a transmission source OID of FOID3, a transmission destination OID of TOID4, a transmission destination MID of TMID4 and a message delivery time interval of T13 are recorded in the log storage area as an event in an execution history. The message delivery interval time T13 is the execution time of a method identified by an MID of TMID2 of an object identified by an OID of FOID2 with the execution of the method triggered by the message (TOID2, TMID2).

Similarly, the message delivery interval time T35 in the example shown in Fig. 25 is the execution time of a method identified by an MID of TMID4 of an object identified by an OID of TOID4.

According to the ECU1 implemented by the third embodiment with a configuration described above, there are exhibited effects 8 and 9 described below in addition to effects 1 and 3 to 7 described above.
8. Since a time interval of the message delivery processing is recorded in a log recording area as an event in an execution history of the control processing in the ECU 1, during a debugging process, it is possible to know how much processing load is borne by a microcomputer in implementation of a function corresponding to unit processing means. Thus, by comparing an execution time estimated by the design with an execution time found in an actual control operation, for example, a problem of a control program can be detected with ease.
9. Since a difference in message contents between an immediately preceding recording timing and a current recording timing is recorded along with the contents of a message as an event in an execution history, it is possible to provide a desirable ECU wherein time information for finding an execution time of a method can be recorded as an event in an execution history in a simple configuration.

### (Fourth Embodiments)

Next, a fourth embodiment of the present invention is described. The fourth embodiment is different from the third embodiment as follows.

In the case of the first to third embodiments described above, an execution history is recorded for each of the objects OB1 to OB5 which are all requested to carry out processing. In the case of the fourth embodiment, on the other hand, an operation to record an execution history for an object determined in advance is disabled.

As shown in Fig. 3, the A/D converter object OB3 exchanges messages with the coolant temperature sensor object OB2. If it has been clarified that the A/D converter object OB3 does not have a problem, it is not necessary to record an execution history for the object OB3. Similarly, the crank sensor object OB5 exchanges messages with the ISC object OB1 and, if it has been clarified that the crank sensor object OB5 does not have a problem, it is not necessary to record an execution history for the object OB5.

For the above reasons, the fourth embodiment does not record information on messages exchanged between the A/D converter object OB3 and the crank sensor object OB5 and information on control data stored in the RAM 6 by the A/D converter object OB3 and the crank sensor object OB5 as events in an execution history.

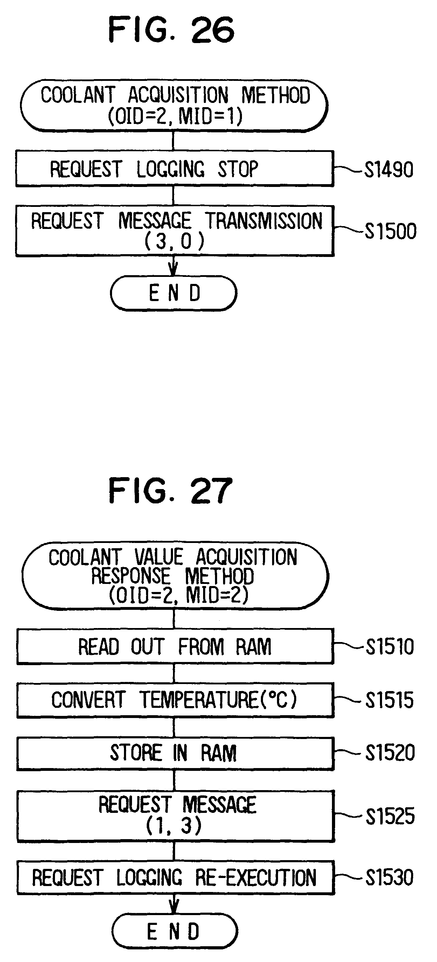

Thus, in the case of the fourth embodiment, a coolant temperature acquisition request method represented by a flow diagram shown in Fig. 26 is executed in place of the coolant temperature acquisition request method represented by the flow diagram shown in Fig. 15. As shown in Fig. 26, the flow diagram representing the coolant temperature acquisition request method begins with S1490 to reset the logging request flag FG which is used to indicate that an execution history is to be recorded when set. The method then proceeds to S1500 at which a request to transmit a message (3, 0) is made.

In addition, in the case of the fourth embodiment, a coolant temperature digital value acquisition response method represented by a flow diagram shown in Fig. 27 is executed in place of the coolant temperature digital value acquisition response method represented by the flow diagram shown in Fig. 16. As shown in Fig. 27, when the coolant temperature digital value acquisition response method is activated, the same pieces of processing as those of S510 to S525 of the flow diagram shown in Fig. 16 are carried out at S1510 to S1525. Then, the method proceeds to S1530 at which the logging request flag FG is set to indicate that an execution history is to be recorded.

Thus, information on a message (5, 0) making a request to acquire a rotational speed of the engine as in the message transmission 3 shown in Fig. 3, a message (3, 0) making a request to acquire a digital value of the coolant temperature as in the message transmission 4 shown in Fig. 3, a message (1, 4) serving as a response to a request to acquire a rotational speed of the engine as in the message transmission 5 shown in Fig. 3 and a message (2, 2) serving as a response to a request to acquire a digital value of the coolant temperature as in the message transmission 6 shown in Fig. 3 is not recorded as events in an execution history with timings of the deliveries of the messages. In addition, information on the rotational speed of the engine stored by the A/D converter object OB3 in the RAM 6 and information on a value generated by the coolant temperature sensor stored by the crank sensor object OB5 in the RAM 6 are also not recorded as events in an execution history.

It should be noted that the logging request flag FG and the pieces of processing carried out at S1222, S1262, S1490 and S1530 function as 'a history recording inhibit means'.. According to the ECU1 implemented by the fourth embodiment with a configuration described above, there is exhibited an effect 10 described below in addition to effects 1 and 3 to 9 described above.
10. Since processing to record an execution history of processing operations for an object determined in advance (that is, processing operations carried out by a predetermined unit processing means) can be disabled, recording of an execution history not required for debugging can be inhibited, making the control program easy to debug. In addition, since the amount of information on an execution history stored in the log storage area can be reduced, there is exhibited an effect of efficient utilization of the memory area.

It should be noted that the above embodiments are not the only possible embodiments of the present invention. It is of course possible that a variety of other embodiments can be provided as far as the other embodiments fall within the technological scope of the present invention.

For example, in the case of the second embodiment described above, with regard to information on control data, information on only control data stored in the RAM 6 is recorded as an event in an execution history. It should be noted that the present invention is not limited to such a scheme. For example, information on control data other the one stored in the RAM 6 can also be recorded as an event in an execution history.

In addition, instead of recording all control data stored in the RAM 6, information on only predetermined control data can be recorded. Specifically, DIDs of only pieces of control data required to be recorded as events of an execution history are stored in a predetermined data table in advance and information on only the pieces of control data is recorded as events in an execution history. It should be noted that the predetermined data table itself is shown in none of the figures.

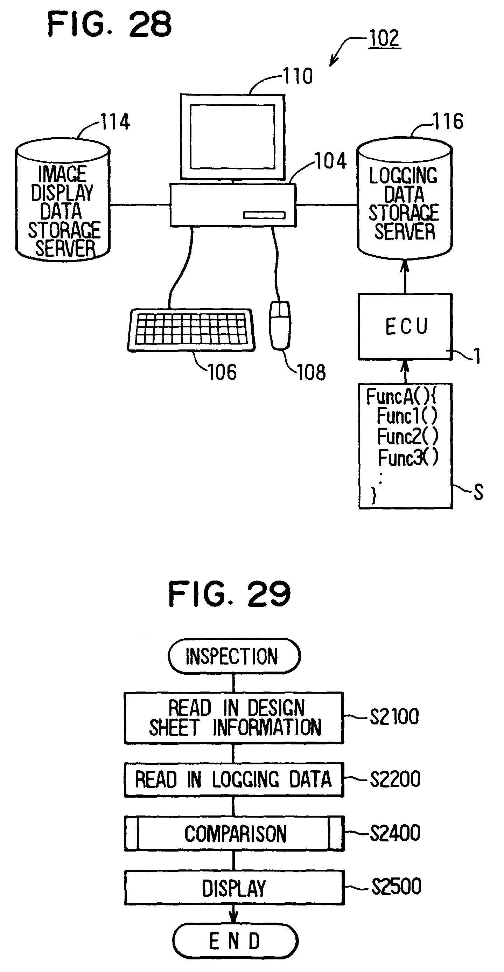

Here, the execution history of control processing carried out in the ECU 1 provided by the present invention is compared with descriptions on a design sheet of the program by a software junction inspection apparatus 102 like one shown in Fig. 28. The program is inspected by comparison of the two.

As shown in Fig. 28, the software junction inspection apparatus 102 comprises a computer 104 including a CPU and memory components such as a ROM and a RAM, an input unit such as a keyboard 106 and a mouse 108 connected to the computer 104 and used for inputting various kinds of information such as a reference number or a scenario number of a design sheet of an inspected object and a display unit 110 connected to the computer 104 and used for displaying a screen. In addition, the computer 104 is connected to a image display data storage server 114 and a logging data storage server 116.

Many pieces of image display data of a design sheet describing specifications required for the operation of the ECU 1 are stored in the image display data storage server 114. The specifications include descriptions of messages exchanges among objects and values of control data. The image display data comprises character data and figure data.

On the other hand, an execution history of a program running on the ECU 1 is stored in the logging data storage server 116. The ECU 1 is connected to the logging data storage server 116 by a communication line. An execution history acquired as a result of an operation carried out by the ECU 1 by execution of a program S is transmitted to the logging data storage server 116 through the communication line.

A program is inspected in the software junction inspection apparatus 102 with a configuration described above by carrying out inspection processing represented by a flow diagram shown in Fig. 29. It should be noted that the inspection processing is exemplified by comparison of an execution history of the ECU 1 implemented by the fourth embodiment with information described on a design sheet.

As shown in the figure, the flow diagram representing the inspection processing begins with S2100 at which the information on the design sheet is acquired. Specifically, figures and characters constituting the design sheet are recognized to identify their locations. Then, information on messages exchanged between objects and information on control data such as data IDs and data values are read in. The information on a message is the OID of an object serving as a transmission source, the OID of an object serving as a transmission destination and the MID of a method of the object serving as a transmission destination. On the other hand, the information on control data is the ID of the data and a value of the data.

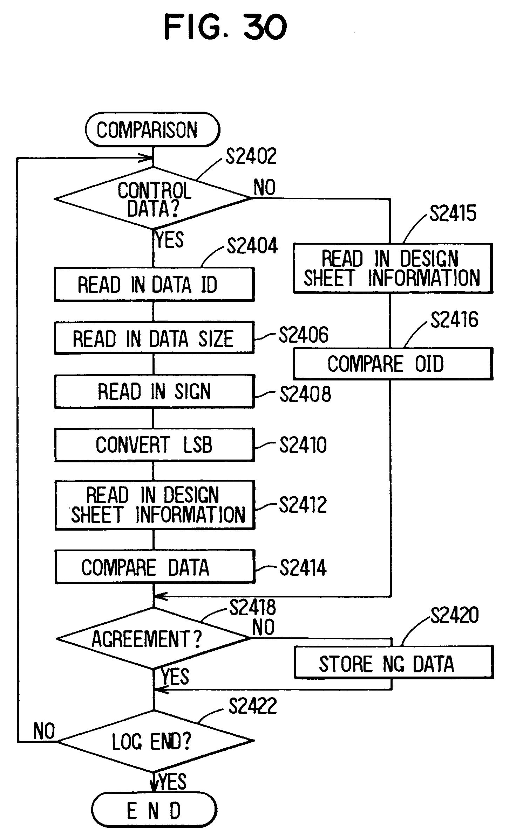

Then, at S2200, an execution history is acquired from the logging data storage server 116. Subsequently, the processing proceeds to S2400 to carry out comparison processing to compare the information on the design sheet with the execution history to determine whether the former agrees with the latter. The comparison processing is represented by a flow diagram shown in Fig. 30.

In the comparison processing, information on the design sheet identified by a scenario number input by the computer 104 is compared with the execution history in block units which are read out sequentially in an order along the time axis in order to determine whether the execution history agrees or disagrees with the information on the design sheet. As shown in Fig. 30, the flow, diagram begins with S2402 at which 1 block of the execution history is read in to determine whether the block is control data by checking the data type of the block.

If the block is control data, that is, if the result of the determination at S2402 is YES, the processing proceeds to S2404 at which the data ID (DID) is read in from an area following the data type. Then, at S2406, a data size representing the length of the control data identified by the data ID read out from S2404 is identified by referring to a conversion table stored in a memory unit of the computer 104 in advance. It should be noted that the conversion table is shown in none of the figures. Subsequently, the processing proceeds to a S2408 to determine whether the control data is signed data, that is, to determine whether the control data includes or excludes a sign or to recognize the format of the data.

The data size is information on how many bytes of a total of 4 bytes in the area for storing control data are used for expressing the control data. Information on presence/absence of a sign indicates whether the control data includes a negative number or is limited to positive numbers only. If the control data is defined as an unsigned positive integer (u) with a length of 1 byte, for example, the range of the data is 0 to 255 when expressed in a decimal format. When expressed in the binary format, the number 255 is represented by 11111111. If the control data is defined as a signed integer (s) with a length of 1 byte, on the other hand, the range of the data is 128 to 127 when expressed in the decimal format. In this case, the binary format number 11111111 represents a decimal number of -1 instead. Thus, in order to detect the substance of the control data correctly, it is necessary to recognize the information on presence/absence of a sign.

Then, at S2410, a data value is read out from an area following the area for storing the data ID by considering the data size and the presence/absence of a sign determined at S2408. The value of the LSB of the data value of the control data identified by the data ID is the resolution per bit of the data value. The resolution is then found from the conversion table and multiplied by the data value stored in a 2byte area following the area for storing the data ID to produce an actual value of the control data which is referred to as a physical quantity.

That is, since a data value recorded as an event of an execution history may be a value of control data acquired as a result of conversion of an actual physical quantity into a decimal number or a binary number, the recorded data value can not be compared as it is with a condition of the control data which is normally prescribed as a physical quantity in the information on the design sheet. By multiplying a data value recorded as an event in the execution history by the value of the LSB of the data value, the data value is converted into a value that can be compared with control data prescribed as a physical quantity in the information on the design sheet.

Thus, in the pieces of processing carried out at S2404 to S2410, the control data is acquired as data that can be compared with the information on the design sheet. Next, at S2412, a block of the information on the design sheet is read in to be compared with the 1 block of the execution history which consists of a data ID and a data value.

Then, at S2414, the block of the information on the design sheet is compared with the block of the execution history. Subsequently, the processing proceeds to S2418 to determine whether the block of the information on the design sheet agrees with the block of the execution history. If the block of the information on the design sheet does not agree with the block of the execution history, that is, if the result of the determination at S2418 is NO, the processing proceeds to S2420 at which the block of the execution history consisting of the data ID and the data value is stored in the memory unit along with information such as a block number of the execution history block.

The block number of a particular execution history block is the sequence number of the particular block in the execution history acquired as a result of counting blocks starting with the head block at the beginning of the execution history to the particular block. The processing then proceeds to S2422. The block of the execution history and the information such as a block number are stored in the memory unit to be displayed as NG data on the display unit 110. As will be described later, the NG data explains a block of the execution history that does not agree with the information on the design sheet. If the block of the information on the design sheet agrees with the block of the execution history, that is, if the result of the determination at S2418 is YES, on the other hand, the processing proceeds to S2422 directly.

Here, if the block of the execution history read in at S2402 is not a block for storing control data but a block for storing information on a message, that is, if the result of the determination at S2402 is NO, on the other hand, the processing proceeds to S2415 at which a block of the information on the design sheet is read in to be compared with the 1 block of the execution history which consists of the OID of a transmission source, the OID of a transmission destination and the MID of a method of the transmission destination at S2416 below.

Then, at S2416, the block of the information on the design sheet is compared with the block of the execution history. Subsequently, the processing proceeds to S2418 to determine whether the block of the information on the design sheet agrees with the block of the execution history. If the block of the information on the design sheet does not agree with the block of the execution history, that is, if the result of the determination at S2418 is NO, the processing proceeds to S2420 at which the block of the execution history consisting of the OID of a transmission source, the OID of a transmission destination and the MID of a method of the transmission destination is stored in the memory unit along with information such a block number of the execution history block.

As described above, the block number of a particular execution history block is the sequence number of the particular block in the execution history acquired as a result of counting blocks starting with the head block at the beginning of the execution history to the particular block. The processing then proceeds to S2422. If the block of the information on the design sheet agrees with the block of the execution history, that is, if the result of the determination at S2418 is YES, on the other hand, the processing proceeds to S2422 directly.

Thus, the processing proceeds to S2422 to determine whether the block of the execution history read in at S2402 is a log end at the tail of the execution history. If the block is not a log end, that is, if the result of the determination at S2422 is NO, the processing returns to S2402 to repeat the comparison process from the beginning. If the block is a log end, that is, if the result of the determination at S2422 is YES, on the other hand, the comparison processing is finished. As described above, in the comparison processing, an execution history recorded by the ECU 1 provided by the present invention is compared with information on the design sheet for the execution history. If both do not agree with each other, the mismatching portion of the execution history is saved.

Referring back to Fig. 29, after the comparison processing at S2400, the processing proceeds to S2500 at which a result of the comparison processing is displayed on the display unit 110. Specifically, the display unit 110 shows a predetermined design sheet drawn on the basis of information on the design sheet. If the result of comparison indicates a complete agreement, that is, if there is no NG data, a message saying "The comparison is OK" is displayed. If there is a part of the execution history that does not agree with the information on the design sheet, on the other hand, a message saying "The comparison is NG" is displayed by emphasizing the mismatching portion based on a part of the execution history stored at S2420 as NG data through the use of a color. As a result, when software modules are not joined in accordance with the design sheet (or the MSC), a portion in question can be discovered immediately.

An engine control is effected by an electronic control unit (1) which has an object-oriented control program. When any one of objects (OB0 - OBn) issues a message to request another object to carry out processing, the contents of the request message are stored in a log storage unit (6, 20) as an event in an execution history of control processing in the electronic control unit 1. Thus, in a process to debug a control program, it is possible to easily recognize which object among a plurality of objects has been executed as part of the control processing. In case a problem is encountered in an operation, an object having the problem can be identified with ease.

## Claims

1. An electronic control apparatus comprising:
a plurality of unit processing means (3) each for carrying out processing for implementing a unit function in accordance with one of objects (OB1 - OBn) acquired as a result of division of a program for controlling controlled objects;
message storage means (6) for temporarily storing a message issued by any one of the unit processing means to another one of the unit processing means to request the another unit processing means to carry out processing; and
unit processing control means (1, 6, 10) for receiving a message issued by any specific one of the unit processing means during a processing operation carried out by the specific unit processing means and storing the message in the message storage means and, upon completion of the processing operation carried out by the specific unit processing means, reading out a specific one of messages from the storage means and requesting one of the unit processing means requested by the specific message to carry out processing to start the processing,
wherein the processing control means includes history recording means (6, 20) for storing contents of the message issued by the specific unit processing means in a predetermined history storage area as an execution history of control processing by the unit processing means.

2. An electronic control apparatus as in claim 1, wherein:
the history recording means (6, 20) stores contents of the message in the history storage area, when the unit processing means receives a message issued by the specific unit processing means.

3. An electronic control apparatus as in claim 1, wherein:
the history recording means stores contents of the message in the history storage area, when the unit processing control means reads out a message from the storage means.

4. An electronic control apparatus as in any one of claims 1 to 3, wherein:
the objects (OB1 - OBn) are stored in a predetermined program storage areas;
the message includes an identification code identifying an object corresponding to the unit processing means requested to carry out processing;
the unit processing control means (3, 6, 10) has a storage location storage area for storing the identification code and a storage location in the program storage areas for storing the program of an object identified by the identification code and, by searching the storage location storage area for a storage location in the program storage areas for storing a program of an object identified by an identification code included in a message read out from the message storage means, the unit processing control means drives one of the unit processing means requested to carry out processing by the message to start the processing; and
the history recording means (6, 20) stores an identification code included in a message in the history storage area as contents of the message.

5. An electronic control apparatus as in any one of claims 1 to 4, wherein:
the unit processing control means (3, 6, 10) further stores information on time for computing a time it takes any one of the unit processing means to carry out a processing operation into the history storage area as an execution history of control processing.

6. An electronic control apparatus as in any one of claims 1 to 5, wherein:
the history recording means (6, 20) further stores a value of control data used in a processing operation carried out by any one of the unit processing means into the history storage area as an execution history of control processing in the electronic control apparatus.

7. An electronic control apparatus as in any one of claims 1 to 6, further comprising:
history recording inhibit means (3) for inhibiting the history recording means from recording an execution history for a processing operation carried out by a predetermined one of the unit processing means into the history storage area.
